# EUROPEAN PATENT APPLICATION

(11) **EP 4 620 746 A1**
(43) Date of publication of application: **24.09.2025**
(21) Application number: 25163279.0
(22) Date of filing: 12.03.2025
(51) Int. Cl.: B60S 1/34, B60S 1/38, B60S 1/40, B60S 1/42

(54) **WIPER DEVICE**

(30) Priority: 21.03.2024 JP 2024044364; 21.03.2024 JP 2024044365
(71) Applicant: Mitsuba Corporation, Kiryu-shi, Gunma 376-8555 (JP)
(72) Inventor: NAKAJIMA, NOBUTAKA, Kiryu-shi, Gunma, 3768555 (JP); ITOI, CHIKA, Kiryu-shi, Gunma, 3768555 (JP); MACHIDA, SHINICHI, Kiryu-shi, Gunma, 3768555 (JP)
(74) Representative: Becker Kurig & Partner Patentanwälte mbB

(57) **Abstract**

An object is to prevent a wiper blade from detaching from a wiper arm contrary to the intention of the user while maintainability is ensuring. A wiper arm (30) and a wiper blade (40) are rotated by a rotation angle of β degrees about an axial center (CT) during wiping. The wiper arm (30) and the wiper blade (40) include: a first and second tip side abutment part (53a, 54a) and a first and second tip side inclined surface (65a, 66a), abutting against each other during rotation by a rotation angle exceeding β degrees in one direction; and a first and second base end side abutment part (53b, 54b) and a first and second base end side inclined surface (65b, 66b), abutting against each other during rotation by a rotation angle exceeding β degrees in the other direction.

## Description

### Technical Field

The disclosure relates to a wiper device including a wiper arm and a wiper blade.

### Related Art

Patent Document 1 describes a wiper device in which a connecting shaft part is provided on a wiper arm, and a groove is provided on a wiper blade. The wiper device described in Patent Document 1 adopts a connecting structure in which the connecting shaft part of the wiper arm is rotatably connected to the groove of the wiper blade by snap-fit.

### Prior Art Documents

### Patent Documents

[Patent Document 1] Japanese Patent Laid-Open No. 2022-089242

### SUMMARY

### Technical Problem

In the technology described in Patent Document 1, when the wiper blade is detached from the wiper arm, a pair of claws forming the groove are bent to pull out the connecting shaft part from the groove. Thus, by reducing the rigidity of the claws, the wiper blade can be easily detached from the wiper arm. On the other hand, when the rigidity of the claws is reduced, for example, when a user lifts the wiper arm in order to remove snow accumulated on a vehicle body, in the case where the wiper blade is frozen and sticks to a wiping surface, the wiper blade is likely to detach from the wiper arm, contrary to the intention of the user.

An object of the disclosure is to provide a wiper device in which detachment of a wiper blade from a wiper arm that is contrary to the intention of the user can be prevented, while maintainability is ensured.

### Solution to Problem

In one aspect of a wiper device, a wiper device includes: a wiper arm, including a first connecting part; and a wiper blade, including a second connecting part connected to the first connecting part and wiping a wiping surface. The first connecting part and the second connecting part are rotatably connected to each other about an axial center extending in a wiping direction of the wiper blade. The wiper arm and the wiper blade are rotated with respect to each other within a predetermined angle range about the axial center during a wiping operation of the wiper blade. The wiper arm and the wiper blade respectively include a first abutment part and a second abutment part that abut against each other when the wiper arm and the wiper blade are rotated beyond the predetermined angle range.

### Effects of Invention

According to the disclosure, the wiper device can be realized in which detachment of the wiper blade from the wiper arm that is contrary to the intention of the user can be prevented, while maintainability is ensured.

### BRIEF DESCRIPTION OF THE DRAWINGS

FIG. 1 is a perspective view of a wiper device as seen from a front side.
FIG. 2 is a cross-sectional view of a portion surrounded by a broken-line circle A in FIG. 1 along a longitudinal direction of the wiper device.
FIG. 3 is a cross-sectional view along line B-B in FIG. 2.
FIG. 4 is a cross-sectional view along line C-C in FIG. 2.
FIG. 5 is a diagram showing a procedure for connecting a wiper arm and a wiper blade.
FIG. 6 is an enlarged view of a portion surrounded by a broken-line circle D in FIG. 5.
FIG. 7 is a perspective view of a connecting member alone as seen from the front side.
FIG. 8 is a view as seen from arrow E in FIG. 7.
FIG. 9 is a view as seen from arrow F in FIG. 7.
FIG. 10 is a diagram showing an inclination state of the wiper blade during forward wiping.
FIG. 11 is a diagram showing an inclination state of the wiper blade during backward wiping.
FIG. 12 is a diagram showing a state of a connected portion of the wiper blade during wiping.
FIG. 13 is a diagram showing one state of a connected portion during maintenance.
FIG. 14 is a diagram showing another state of a connected portion during maintenance.

### DESCRIPTION OF THE EMBODIMENTS

The following describes in detail an embodiment of the disclosure using the drawings.

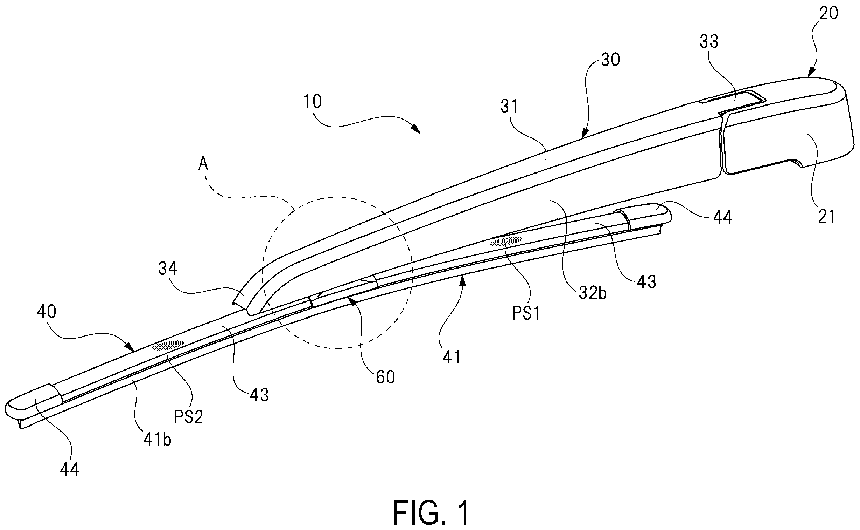

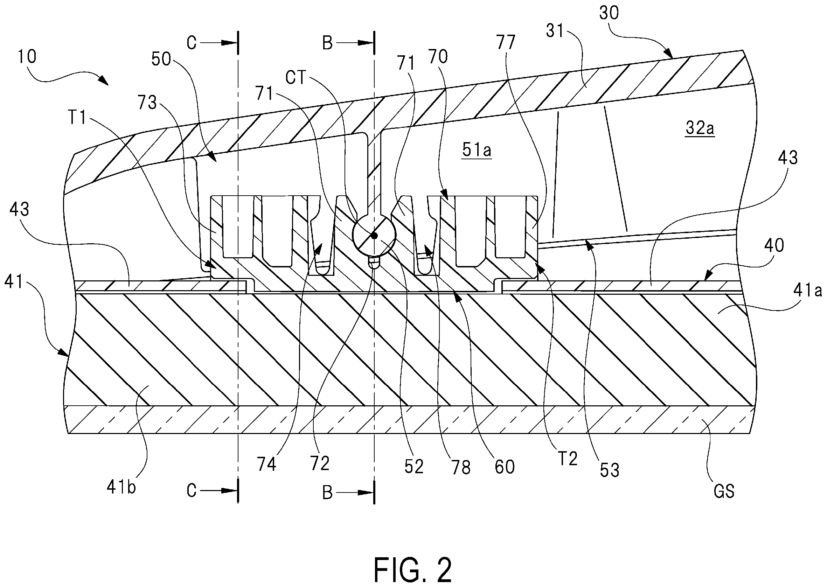

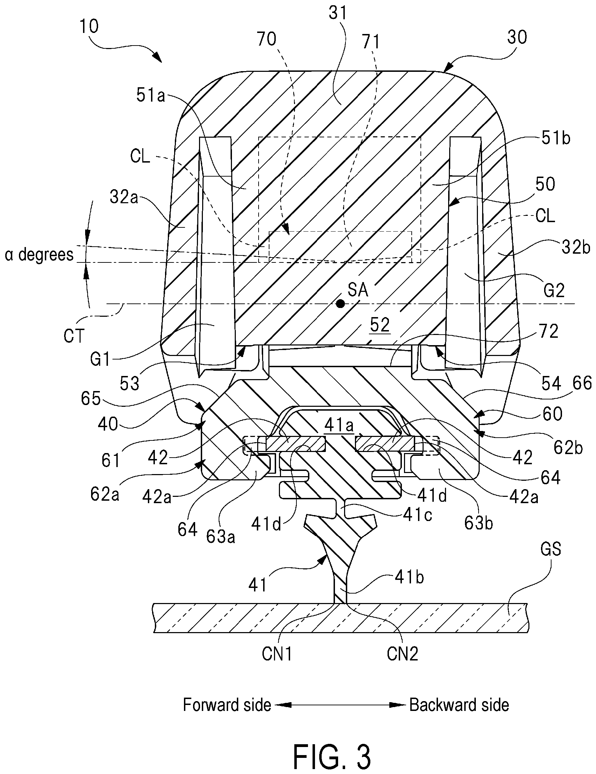

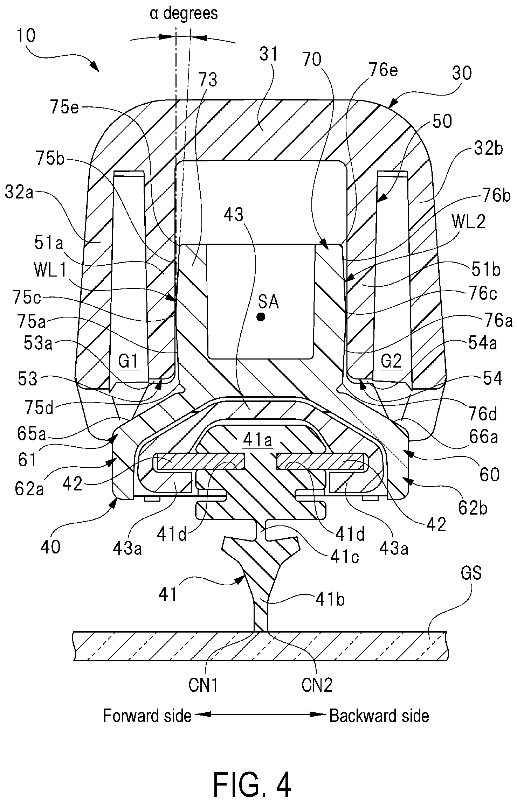

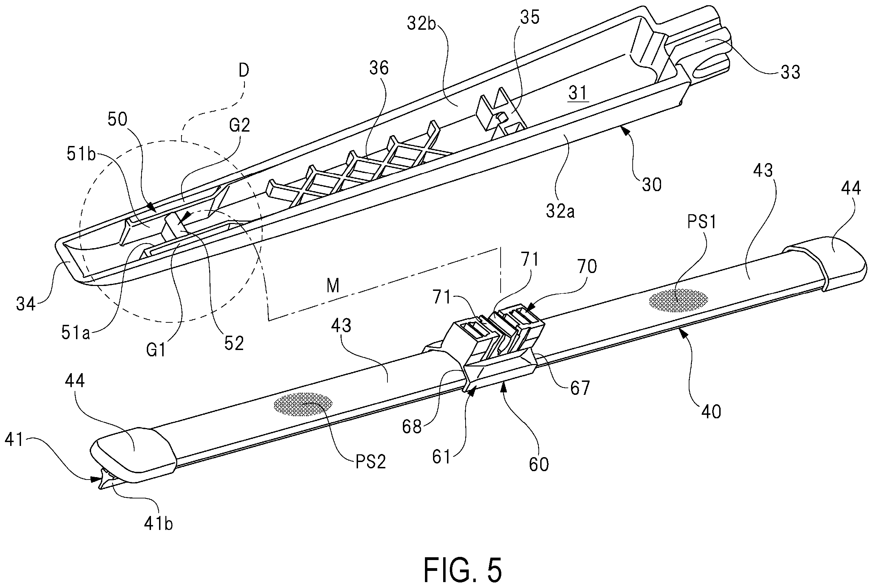

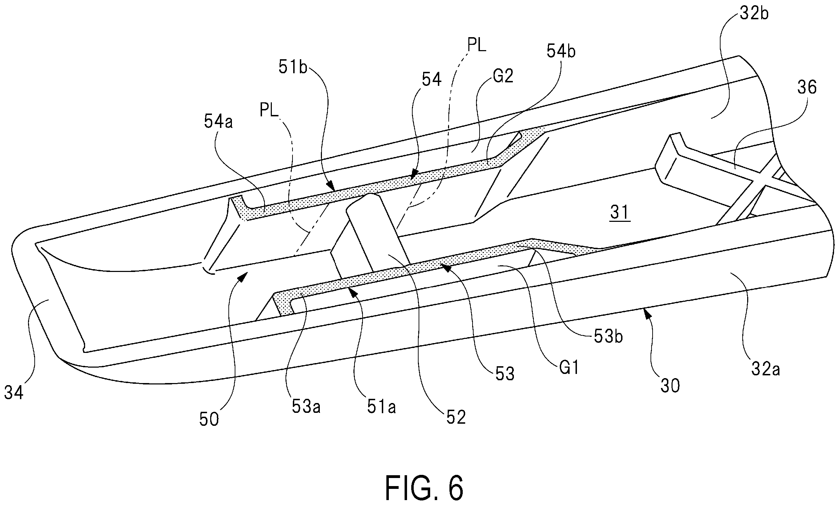

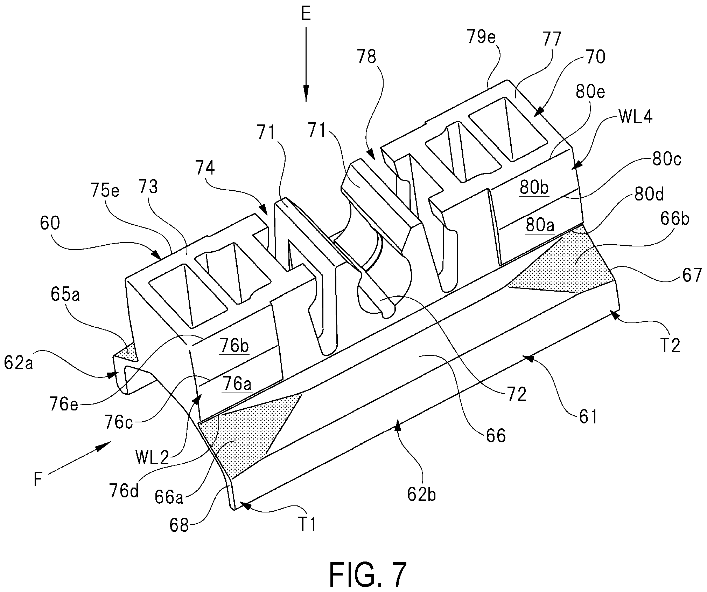

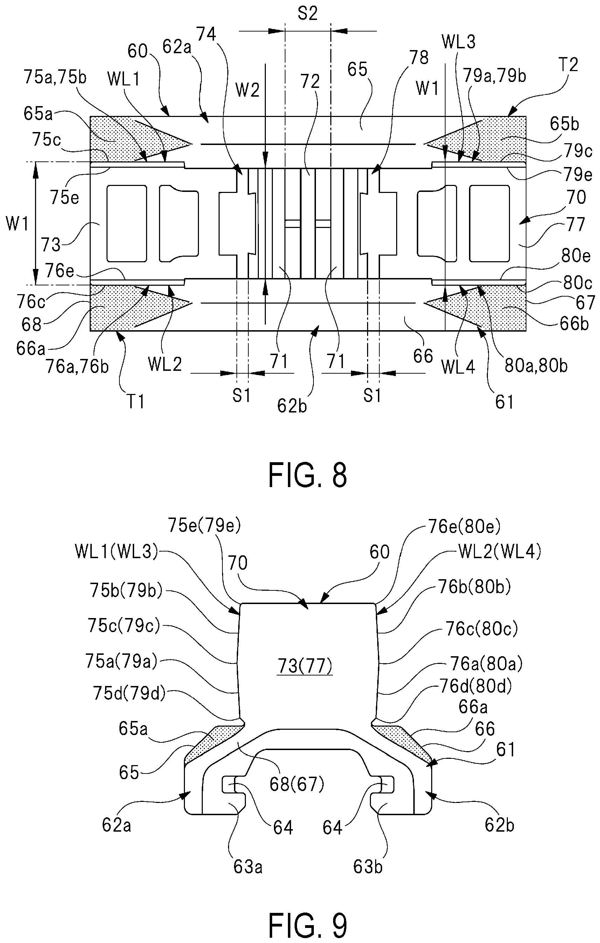

FIG. 1 illustrates a perspective view of a wiper device as seen from a front side. FIG. 2 illustrates a cross-sectional view of a portion surrounded by a broken-line circle A in FIG. 1 along a longitudinal direction of the wiper device. FIG. 3 illustrates a cross-sectional view along line B-B in FIG. 2. FIG. 4 illustrates a cross-sectional view along line C-C in FIG. 2. FIG. 5 illustrates a procedure for connecting a wiper arm and a wiper blade. FIG. 6 illustrates an enlarged view of a portion surrounded by a broken-line circle D in FIG. 5. FIG. 7 illustrates a perspective view of a connecting member alone as seen from the front side. FIG. 8 illustrates a view as seen from arrow E in FIG. 7. FIG. 9 illustrates a view as seen from arrow F in FIG. 7.

### <Wiper Device>

A wiper device 10 shown in FIG. 1 to FIG. 4 is for wiping a rear glass GS provided on a back door (not shown) of a vehicle such as an automobile. The wiper device 10 includes: an arm head 20, fixed to a rotating shaft (not shown) of a wiper motor mounted on the back door; a wiper arm 30, having a base end side (right side in FIG. 1) rotatably connected to the arm head 20; and a wiper blade 40, having a longitudinal central part rotatably connected to a tip side (left side in FIG. 1) of the wiper arm 30.

The rear glass GS corresponds to a wiping surface in the disclosure.

The arm head 20 includes a head body (not shown). The head body is firmly fixed to the rotating shaft of the wiper motor by a fastening nut (not shown). Accordingly, by driving the wiper motor and rotating the rotating shaft in forward and reverse directions, the wiper arm 30 and the wiper blade 40 perform a forward and backward wiping operation on the rear glass GS.

Here, as shown in FIG. 1, the arm head 20 includes a cover member 21 made of resin. The cover member 21 covers and conceals the head body and the fastening nut, thereby preventing the head body and the fastening nut from being exposed to the outside, thus improving the overall appearance of the wiper device 10.

### <Wiper Arm>

As shown in FIG. 1 to FIG. 6, the wiper arm 30 is formed in a substantially rod shape by injection molding of a resin material such as plastic. The wiper arm 30 is substantially U-shaped in cross-section along a wiping direction of the wiper blade 40.

The wiper arm 30 includes: a top wall 31; and a forward sidewall 32a and a backward sidewall 32b, integrally provided on both sides in a short direction of the top wall 31. That is, the forward sidewall 32a and backward sidewall 32b of the wiper arm 30 are arranged facing each other in the wiping direction (left and right sides in FIG. 3 and FIG. 4) of the wiper blade 40, and correspond to a pair of outer walls in the disclosure.

The forward sidewall 32a is arranged on a forward side (left side in FIG. 3 and FIG. 4) in the wiping direction of the wiper blade 40, and the backward sidewall 32b is arranged on a backward side (right side in FIG. 3 and FIG. 4) in the wiping direction of the wiper blade 40. The top wall 31 is arranged on a side (upper side in FIG. 3 and FIG. 4) opposite to the rear glass GS side of the forward sidewall 32a and backward sidewall 32b. Accordingly, the wiper arm 30 having a substantially U-shaped cross-section is opened on the rear glass GS side (lower side in FIG. 3 and FIG. 4).

As shown in FIG. 1 and FIG. 5, an arm connecting part 33 is integrally provided on the base end side of the wiper arm 30, that is, the arm head 20 side (right side in the figure) of the wiper arm 30. The arm connecting part 33 protrudes from the base end side of the top wall 31, the forward sidewall 32a and the backward sidewall 32b toward the arm head 20, and is rotatably connected to a head shaft (not shown) provided on the head body. Here, the wiper arm 30 rotatably connected to the head shaft is able to stand in a direction away from the rear glass GS with respect to the arm head 20.

Furthermore, an arm tip 34 that gradually tapers toward the tip side (left side in the figure) of the wiper arm 30 is integrally provided on the tip side. Here, as shown in FIG. 1, the arm tip 34 is arranged in the vicinity of the wiper blade 40. However, during a wiping operation of the wiper device 10, the arm tip 34 does not contact the wiper blade 40. Thus, there is neither deterioration of wiping performance of the wiper device 10 nor damage to the wiper blade 40.

As shown in FIG. 5, a spring hook part 35 is integrally provided in a portion on the inside of the wiper arm 30 and close to the arm connecting part 33. A tip side (not shown) of a tension spring can be hooked onto the spring hook part 35. The spring force of the tension spring acts to press the wiper blade 40 toward the rear glass GS with a predetermined pressure. The spring hook part 35 is integrally provided with the top wall 31, the forward sidewall 32a and the backward sidewall 32b, and sufficient strength is ensured.

On the inside of the wiper arm 30, in a longitudinal central part of the wiper arm 30, a reinforcement rib 36 formed in a substantially mesh pattern is integrally provided. The reinforcement rib 36 protrudes to a predetermined height on the inside of the wiper arm 30, and is integrally provided with the top wall 31, the forward sidewall 32a and the backward sidewall 32b. Accordingly, the wiper arm 30 may be reduced in weight while being enhanced in strength.

### <Arm Side Connecting Member>

Furthermore, an arm side connecting member 50 is integrally provided in a portion on the inside of the wiper arm 30 and close to the arm tip 34. Specifically, the arm side connecting member 50 is arranged between the arm tip 34 and the reinforcement rib 36 in the longitudinal direction of the wiper arm 30. The arm side connecting member 50 includes a first connecting wall 51a, a second connecting wall 51b, and a connecting shaft part 52.

The connecting shaft part 52 corresponds to a first connecting part and a connecting shaft in the disclosure.

Here, the first connecting wall 51a is arranged on the forward side (left side in FIG. 3 and FIG. 4) in the wiping direction of the wiper blade 40, and the second connecting wall 51b is arranged on the backward side (right side in FIG. 3 and FIG. 4) in the wiping direction of the wiper blade 40. The connecting shaft part 52 extends in the wiping direction (left and right sides in FIG. 3) of the wiper blade 40, and is arranged between the first connecting wall 51a and the second connecting wall 51b.

The first connecting wall 51a and the second connecting wall 51b are arranged between the forward sidewall 32a and the backward sidewall 32b, support the connecting shaft part 52, and correspond to a pair of sidewalls in the disclosure.

The first connecting wall 51a and the second connecting wall 51b are arranged facing each other in the wiping direction of the wiper blade 40, and support the connecting shaft part 52 in the wiping direction of the wiper blade 40. The first connecting wall 51a corresponds to a first sidewall in the disclosure, and the second connecting wall 51b corresponds to a second sidewall in the disclosure.

As shown in FIG. 6, the first connecting wall 51a is provided adjacent to the forward sidewall 32a, and both longitudinal sides (left and right sides in the figure) of the first connecting wall 51a are connected to be integral with the forward sidewall 32a. One axial side (forward side in the wiping direction) of the connecting shaft part 52 is connected to be integral with the first connecting wall 51a. Furthermore, a forward side gap G1 is formed between the first connecting wall 51a and the forward sidewall 32a, and the forward side gap G1 functions as a thickness reduction portion that suppresses the occurrence of sink marks or voids during injection molding of the wiper arm 30. By providing the forward side gap G1, the wiper arm 30 may be reduced in weight.

The second connecting wall 51b is provided adjacent to the backward sidewall 32b, and both longitudinal sides (left and right sides in the figure) of the second connecting wall 51b are connected to be integral with the backward sidewall 32b. Furthermore, the other axial side (backward side in the wiping direction) of the connecting shaft part 52 is connected to be integral with the second connecting wall 51b. A backward side gap G2 is formed between the second connecting wall 51b and the backward sidewall 32b. Like the forward side gap G1, the backward side gap G2 also functions as a thickness reduction portion, and the wiper arm 30 may be reduced in weight.

Furthermore, as shown in the hatching portions in FIG. 6, on surfaces of the first connecting wall 51a and second connecting wall 51b facing the rear glass GS, a first sidewall end 53 and a second sidewall end 54 are respectively provided which extend parallel to surfaces of the forward backward sidewall 32a and backward sidewall 32b as a pair facing the rear glass GS as seen from the wiping direction of the wiper blade 40. The first sidewall end 53 and the second sidewall end 54 are arranged in a direction away from the rear glass GS compared to the surfaces of the forward backward sidewall 32a and backward sidewall 32b as a pair facing the rear glass GS.

On a longitudinal tip side (left side in the figure) of the first sidewall end 53 and second sidewall end 54, a first tip side abutment part 53a and a second tip side abutment part 54a are respectively provided. On a longitudinal base end side (right side in the figure) of the first sidewall end 53 and second sidewall end 54, a first base end side abutment part 53b and a second base end side abutment part 54b are respectively provided. The first tip side abutment part 53a, the second tip side abutment part 54a, the first base end side abutment part 53b, and the second base end side abutment part 54b are able to abut against a first tip side inclined surface 65a, a second tip side inclined surface 66a, a first base end side inclined surface 65b, and a second base end side inclined surface 66b (see FIG. 8) provided on a blade side connecting member 60 forming the wiper blade 40 during maintenance of the wiper device 10 (when a pair of holding claws 71 are detached from the connecting shaft part 52).

The first tip side abutment part 53a, the second tip side abutment part 54a, the first base end side abutment part 53b, and the second base end side abutment part 54b correspond to a first abutment part in the disclosure.

Here, the first tip side abutment part 53a and the second tip side abutment part 54a are arranged between the arm tip 34 and the connecting shaft part 52 in the longitudinal direction of the wiper arm 30. The first base end side abutment part 53b and the second base end side abutment part 54b are arranged on a side opposite to the arm tip 34 with respect to the connecting shaft part 52 in the longitudinal direction of the wiper arm 30. The first connecting wall 51a, the second connecting wall 51b, and the connecting shaft part 52 (arm side connecting member 50) are covered and concealed by the forward sidewall 32a and the backward sidewall 32b when the wiper arm 30 is viewed from the wiping direction of the wiper blade 40. This also improves the overall appearance of the wiper device 10.

### <Wiper Blade>

As shown in FIG. 1 to FIG. 5, the wiper blade 40 that wipes the rear glass GS can be rotatably connected to the arm side connecting member 50 provided on the tip side of the wiper arm 30. The wiper blade 40 includes: a blade rubber 41; a pair of vertebrae 42, mounted on the blade rubber 41; a pair of rubber holders 43, holding the pair of vertebrae 42; a pair of end caps 44, covering an end of the pair of rubber holders 43; and a blade side connecting member 60, holding the pair of vertebrae 42 and rotatably connected to the arm side connecting member 50.

As shown in FIG. 3 and FIG. 4, the blade rubber 41 includes: a blade body 41a, held by the pair of vertebrae 42; and a lip 41b, making sliding contact with the rear glass GS. A neck 41c is provided between the blade body 41a and the lip 41b. The neck 41c is narrower than the lip 41b and has more flexibility than the lip 41b. Accordingly, when the blade rubber 41 performs a forward and backward wiping operation on the rear glass GS, the lip 41b is easily tilted. As a result, a first corner CN1 and a second corner CN2 of a tip of the lip 41b cleanly wipe off rainwater or dust or the like adhering to the rear glass GS.

The blade rubber 41 is provided throughout the entire longitudinal direction of the wiper blade 40. The wiper blade 40 has the same cross-sectional shape along the wiping direction throughout the entire longitudinal direction of the blade rubber 41. On the forward side and backward side of the blade body 41a, a pair of grooves 41d extending in the longitudinal direction of the blade rubber 41 are provided. Substantially half of each vertebra 42 along the width direction (wiping direction of the wiper blade 40) enters each of the pair of grooves 41d. Accordingly, the blade rubber 41 is held by the pair of rubber holders 43 and the blade side connecting member 60 via the pair of vertebrae 42.

The pair of vertebrae 42 are formed in an elongated rod shape, function as a plate spring, and are held by the pair of rubber holders 43 and the blade side connecting member 60. The pair of vertebrae 42 are provided throughout the entire longitudinal direction of the wiper blade 40, and have a length dimension substantially equal to a length dimension of the blade rubber 41.

The pair of vertebrae 42 are curved to have a predetermined curvature in a free state in which no external force is applied. Specifically, the curvature of the pair of vertebrae 42 is smaller than a curvature of the rear glass GS. Accordingly, the lip 41b can be brought into close contact with the rear glass GS in accordance with the curvature of the rear glass GS throughout the entire longitudinal direction. Thus, sufficient wiping performance of the wiper blade 40 is ensured.

The other substantially half of the pair of vertebrae 42 that does not enter the groove 41d is held by a pair of rubber holder side holding claws 43a (see FIG. 4) provided on the rubber holder 43 as well as a first connecting member side holding claw 63a and a second connecting member side holding claw 63b as a pair (see FIG. 3 and FIG. 9) on the blade side connecting member 60.

As shown in FIG. 3, engagement grooves 42a are respectively provided in a longitudinal central part of the pair of vertebrae 42. A pair of engagement convex parts 64 provided on the blade side connecting member 60 are hooked into the engagement grooves 42a. Accordingly, the pair of vertebrae 42 are in a state in which their movement in the longitudinal direction with respect to the blade side connecting member 60 is restricted, that is, a come-off prevention state.

Furthermore, cap fixing grooves (not shown) are respectively provided on both longitudinal sides of the pair of vertebrae 42, and engagement protrusions (not shown) provided on the inside of the end caps 44 are engaged with these cap fixing grooves. Accordingly, the pair of end caps 44 are fixed in a come-off prevention state on both longitudinal sides of the pair of vertebrae 42, respectively. Thus, the rubber holders 43 respectively arranged between the blade side connecting member 60 and the pair of end caps 44 are also in a come-off prevention state.

Here, the pair of rubber holders 43 that hold the pair of vertebrae 42 cover a side of the blade rubber 41 opposite to the rear glass GS side, and cover the pair of vertebrae 42 and the blade body 41a of the blade rubber 41. This also improves the overall appearance of the wiper device 10.

The pair of rubber holders 43 are made of a plastic material having flexibility or the like, and are easily elastically deformable. Accordingly, the pair of rubber holders 43 can easily follow the curved shape of the vertebrae 42, and consequently, the wiping performance of the wiper blade 40 is not reduced.

As shown in FIG. 1 and FIG. 5, longitudinal central parts of each rubber holder 43 of the wiper blade 40 serve as pressing parts PS1 and PS2 (see hatching portions) to be pressed by a user during maintenance of the wiper device 10. Specifically, the pressing parts PS1 and PS2 are provided at a position (position where a finger is easily arranged) easy for the user to grasp in the longitudinal direction of the rubber holder 43.

The pressing part PS1 is arranged on a side (base end side of the wiper blade 40) opposite to the side where the first tip side abutment part 53a and second tip side abutment part 54a (see FIG. 6) of the arm side connecting member 50 and the first tip side inclined surface 65a and second tip side inclined surface 66a (see FIG. 8) of the blade side connecting member 60 are arranged across an axial center CT (see FIG. 2) in the longitudinal direction of the wiper blade 40. The pressing part PS2 is arranged on a side (tip side of the wiper blade 40) opposite to the side where the first base end side abutment part 53b and second base end side abutment part 54b (see FIG. 6) of the arm side connecting member 50 and the first base end side inclined surface 65b and second base end side inclined surface 66b (see FIG. 8) of the blade side connecting member 60 are arranged across the axial center CT (see FIG. 2) in the longitudinal direction of the wiper blade 40. The pressing parts PS1 and PS2 serve as a position to be pressed in a direction of pulling the wiper blade 40 away from the wiper arm 30 when the wiper blade 40 is detached from the wiper arm 30.

The method of performing maintenance work (maintenance work of the wiper device 10) in which the wiper blade 40 is detached from the wiper arm 30 by pressing the pressing part PS1 or the pressing part PS2 will be described in detail later.

### <Blade Side Connecting Member>

As shown in FIG. 2 to FIG. 5 and FIG. 7 to FIG. 9, the blade side connecting member 60 rotatably connected to the arm side connecting member 50 is formed from a resin material such as plastic in a substantially rectangular parallelepiped shape extending in the longitudinal direction of the wiper blade 40. Specifically, the blade side connecting member 60 includes: a vertebra holding part 61; and a connecting body 70, integrally provided on the vertebra holding part 61.

The blade side connecting member 60 corresponds to a connecting member in the disclosure.

### <Vertebra Holding Part>

As shown in FIG. 7 to FIG. 9, the vertebra holding part 61 is wider than the connecting body 70 in the wiping direction (left-right direction in FIG. 9) of the wiper blade 40. On the other hand, the vertebra holding part 61 has a smaller height than the connecting body 70 in a vertical direction (up-down direction in FIG. 9) of the rear glass GS. That is, the vertebra holding part 61 is smaller in thickness than the connecting body 70, thereby suppressing an increase in the overall height of the wiper device 10.

The vertebra holding part 61 is arranged on the rear glass GS side of the blade side connecting member 60, and holds the blade rubber 41 that wipes the rear glass GS via the pair of vertebrae 42.

The vertebra holding part 61 corresponds to a blade holding part in the disclosure.

As shown in FIG. 8 and FIG. 9, the vertebra holding part 61 includes a first swelling part 62a and a second swelling part 62b respectively protruding to both sides (upper and lower sides in FIG. 8 and left and right sides in FIG. 9) in the wiping direction of the wiper blade 40 with the connecting body 70 as the center. The first swelling part 62a is arranged on the forward side in the wiping direction of the wiper blade 40, and the second swelling part 62b is arranged on the backward side in the wiping direction of the wiper blade 40.

On the rear glass GS side (lower side in FIG. 9) of the first swelling part 62a, the first connecting member side holding claw 63a that holds the vertebra 42 arranged on the forward side is integrally provided. In a central part of the first connecting member side holding claw 63a in the longitudinal direction of the wiper blade 40, the engagement convex part 64 to be hooked into the engagement groove 42a (see FIG. 3) provided on the vertebra 42 is provided.

On the rear glass GS side (lower side in FIG. 9) of the second swelling part 62b, the second connecting member side holding claw 63b that holds the vertebra 42 arranged on the backward side is integrally provided. In a central part of the second connecting member side holding claw 63b in the longitudinal direction of the wiper blade 40, the engagement convex part 64 to be hooked into the engagement groove 42a (see FIG. 3) provided on the vertebra 42 is provided.

As shown in FIG. 8, on a side opposite to the rear glass GS side of the first swelling part 62a, a first inclined surface 65 is provided to extend in the longitudinal direction of the vertebra holding part 61. The first inclined surface 65 is inclined so as to gradually decrease in height from the connecting body 70 toward the forward side in the wiping direction of the wiper blade 40. That is, the first inclined surface 65 is inclined to approach the rear glass GS as moving away from the connecting body 70 in the wiping direction of the wiper blade 40. On both longitudinal sides of the first inclined surface 65, the first tip side inclined surface 65a and the first base end side inclined surface 65b (see hatching portions) are arranged.

The first inclined surface 65 corresponds to an inclined surface in the disclosure.

Specifically, the first tip side inclined surface 65a is an inclined surface that is inclined to approach the rear glass GS as moving away from the connecting body 70 toward the forward side in the wiping direction of the wiper blade 40. The first tip side inclined surface 65a is an inclined surface that is inclined to approach the rear glass GS as moving away from the pair of holding claws 71 toward the longitudinal tip side of the blade side connecting member 60.

During maintenance of the wiper device 10, the first tip side abutment part 53a (see FIG. 6) of the arm side connecting member 50 is able to abut against the first tip side inclined surface 65a. More specifically, during maintenance of the wiper device 10, the first tip side abutment part 53a is able to make line contact with the first tip side inclined surface 65a.

Furthermore, the first base end side inclined surface 65b is an inclined surface that is inclined to approach the rear glass GS as moving away from the connecting body 70 toward the forward side in the wiping direction of the wiper blade 40. The first base end side inclined surface 65b is an inclined surface that is inclined to approach the rear glass GS as moving away from the pair of holding claws 71 toward the longitudinal base end side of the blade side connecting member 60.

During maintenance of the wiper device 10, the first base end side abutment part 53b (see FIG. 6) of the arm side connecting member 50 is able to abut against the first base end side inclined surface 65b. More specifically, during maintenance of the wiper device 10, the first base end side abutment part 53b is able to make line contact with the first base end side inclined surface 65b.

As shown in FIG. 8, on a side opposite to the rear glass GS side of the second swelling part 62b, a second inclined surface 66 is provided to extend in the longitudinal direction of the vertebra holding part 61. The second inclined surface 66 is inclined so as to gradually decrease in height from the connecting body 70 toward the backward side in the wiping direction of the wiper blade 40. That is, the second inclined surface 66 is inclined to approach the rear glass GS as moving away from the connecting body 70 in the wiping direction of the wiper blade 40. On both longitudinal sides of the second inclined surface 66, the second tip side inclined surface 66a and the second base end side inclined surface 66b (see hatching portions) are arranged.

The second inclined surface 66 corresponds to the inclined surface in the disclosure.

Specifically, the second tip side inclined surface 66a is an inclined surface that is inclined to approach the rear glass GS as moving away from the connecting body 70 toward the backward side in the wiping direction of the wiper blade 40. The second tip side inclined surface 66a is an inclined surface that is inclined to approach the rear glass GS as moving away from the pair of holding claws 71 toward the longitudinal tip side of the blade side connecting member 60.

During maintenance of the wiper device 10, the second tip side abutment part 54a (see FIG. 6) of the arm side connecting member 50 is able to abut against the second tip side inclined surface 66a. More specifically, during maintenance of the wiper device 10, the second tip side abutment part 54a is able to make line contact with the second tip side inclined surface 66a.

Furthermore, the second base end side inclined surface 66b is an inclined surface that is inclined to approach the rear glass GS as moving away from the connecting body 70 toward the backward side in the wiping direction of the wiper blade 40. The second base end side inclined surface 66b is an inclined surface that is inclined to approach the rear glass GS as moving away from the pair of holding claws 71 toward the longitudinal base end side of the blade side connecting member 60.

During maintenance of the wiper device 10, the second base end side abutment part 54b (see FIG. 6) of the arm side connecting member 50 is able to abut against the second base end side inclined surface 66b. More specifically, during maintenance of the wiper device 10, the second base end side abutment part 54b is able to make line contact with the second base end side inclined surface 66b.

The first tip side inclined surface 65a, second tip side inclined surface 66a, first base end side inclined surface 65b and second base end side inclined surface 66b of the blade side connecting member 60 correspond to a second abutment part in the disclosure.

Here, in the first swelling part 62a and the second swelling part 62b, as shown in FIG. 2, an end of each rubber holder 43 enters each of a tip T1 (left side in FIG. 8) where the first tip side inclined surface 65a and the second tip side inclined surface 66a are provided and a base end T2 (right side in FIG. 8) where the first base end side inclined surface 65b and the second base end side inclined surface 66b are provided. That is, the end of each rubber holder 43 is arranged on each of a side (rear glass GS side) opposite to the first tip side inclined surface 65a and second tip side inclined surface 66a side and a side (rear glass GS side) opposite to the first base end side inclined surface 65b and second base end side inclined surface 66b side.

That is, at the tip T1 and the base end T2, the end of each rubber holder 43 is arranged on each of the side (rear glass GS side) opposite to the first tip side inclined surface 65a and second tip side inclined surface 66a side and the side (rear glass GS side) opposite to the first base end side inclined surface 65b and second base end side inclined surface 66b side. At the tip T1 and the base end T2, the first tip side inclined surface 65a and second tip side inclined surface 66a and the first base end side inclined surface 65b and second base end side inclined surface 66b are respectively provided on the sides opposite to the rear glass GS side.

In this way, the first swelling part 62a and the second swelling part 62b have a function of covering and concealing the end of the rubber holder 43. This also improves the overall appearance of the wiper device 10. By sandwiching the rubber holder 43 with the first swelling part 62a, the second swelling part 62b and the end cap 44, the rubber holder 43 is prevented from falling off from the pair of vertebrae 42 and the blade rubber 41.

The tip T1 and the base end T2 are provided on both longitudinal sides of the vertebra holding part 61, and respectively cover the ends of the pair of rubber holders 43. That is, the tip T1 and the base end T2 correspond to a holder covering part in the disclosure.

The tip T1 is arranged at a position corresponding to a first block side forward wall WL1 and a second block side forward wall WL3 in the longitudinal direction of the wiper blade 40. The base end T2 is arranged at a position corresponding to a first block side backward sidewall WL2 and a second block side backward sidewall WL4 in the longitudinal direction of the wiper blade 40.

### <Connecting Body>

As shown in FIG. 7 to FIG. 9, the connecting body 70 is formed in a substantially rectangular parallelepiped shape. The connecting body 70 enters between the first connecting wall 51a and second connecting wall 51b of the arm side connecting member 50 (see FIG. 6), and can be rotatably connected to the connecting shaft part 52 (see FIG. 6) of the arm side connecting member 50.

That is, the connecting body 70 functions as an adapter that connects the wiper arm 30 and the wiper blade 40. The connecting body 70 is arranged on a side opposite to the rear glass GS side of the vertebra holding part 61, and corresponds to an adapter part in the disclosure.

The pair of holding claws 71 are provided in a longitudinal central part of the connecting body 70. These holding claws 71 protrude on a side opposite to the rear glass GS side, and are arranged facing each other in the longitudinal direction of the wiper blade 40. The pair of holding claws 71 each have flexibility in the longitudinal direction of the wiper blade 40. Thus, as shown in FIG. 2, the connecting shaft part 52 can be mounted by snap-fit on the inside of the pair of holding claws 71.

Specifically, as indicated by a one-dot chain line arrow M in FIG. 5, the pair of holding claws 71 abut against the connecting shaft part 52 from the rear glass GS side (lower side in FIG. 2), and the pair of holding claws 71 are elastically deformed by the connecting shaft part 52. Accordingly, the connecting shaft part 52 is inserted inside the pair of holding claws 71. In FIG. 2, an insertion direction of the connecting shaft part 52 with respect to the pair of holding claws 71 is from the direction opposite to the rear glass GS side. The connecting shaft part 52 connected to the pair of holding claws 71 is rotatable about the axial center CT (see FIG. 2 and FIG. 3).

In this way, the connecting shaft part 52 and the pair of holding claws 71 are rotatably connected to each other about the axial center CT that extends in a direction orthogonal to the longitudinal direction of the wiper blade 40.

The pair of holding claws 71 correspond to a second connecting part in the disclosure.

The connecting shaft part 52 does not move in the longitudinal direction and wiping direction of the wiper blade 40 with respect to the pair of holding claws 71. However, the connecting shaft part 52 is able to be inclined in a clockwise direction and a counterclockwise direction about the tilting center SA inside the pair of holding claws 71. Specifically, an inclination angle of the connecting shaft part 52 with respect to the pair of holding claws 71 about the tilting center SA is α degrees (for example, 3 degrees) in each of both the clockwise and counterclockwise directions from the state (state in which the wiper blade 40 is not inclined with respect to the wiper arm 30) shown in FIG. 3. The tilting center SA is arranged on the axial center CT and is arranged in a longitudinal central part of the connecting shaft part 52.

As shown in FIG. 7, at the base of the pair of holding claws 71, that is, on the vertebra holding part 61 side in an extension direction of the pair of holding claws 71, a recessed groove 72 is provided to extend in the wiping direction of the wiper blade 40. The recessed groove 72 is arranged between the pair of holding claws 71 in the longitudinal direction of the wiper blade 40. Accordingly, the pair of holding claws 71 is likely to bend. The recessed groove 72 has a substantially semicircular cross-sectional shape along the longitudinal direction of the wiper blade 40. Accordingly, the stress acting on the base of the pair of holding claws 71 can be dispersed, and damage to the base of the pair of holding claws 71 due to stress concentration can be suppressed.

### <First Block Part>

As shown in FIG. 7 and FIG. 8, with the pair of holding claws 71 as the center, a first block part 73 formed in a substantially hollow box shape is provided on the longitudinal tip side (left side in the figure) of the connecting body 70. By making the first block part 73 in a substantially hollow box shape in this way, deformation of the first block part 73 due to sink marks or voids during injection molding of the blade side connecting member 60 is suppressed. The first block part 73 is a portion that extends into the tip side of the wiper arm 30 beyond the connecting shaft part 52 between the first connecting wall 51a and second connecting wall 51b of the arm side connecting member 50.

Here, in the longitudinal direction of the wiper blade 40, a first gap 74 is provided between the first block part 73 and the holding claw 71. The first gap 74 serves as a gap that allows elastic deformation of the holding claw 71.

As shown in FIG. 7 to FIG. 9, on the forward side of the first block part 73 in the wiping direction of the wiper blade 40, the first block side forward wall WL1 is provided. The first block side forward wall WL1 enters inside the first connecting wall 51a and the second connecting wall 51b, so as to face the first connecting wall 51a.

The first block side forward wall WL1 includes a first forward side inclined wall 75a and a second forward side inclined wall 75b. Specifically, the first forward side inclined wall 75a is arranged on the rear glass GS side of the first block part 73, and the second forward side inclined wall 75b is arranged on a side opposite to the rear glass GS side of the first block part 73.

Furthermore, as shown in FIG. 4, both the first forward side inclined wall 75a and the second forward side inclined wall 75b are inclined at a gentle inclination angle of α degrees (for example, 3 degrees) with respect to the vertical direction of the rear glass GS. The first forward side inclined wall 75a faces toward the rear glass GS side, and the second forward side inclined wall 75b faces toward a side opposite to the rear glass GS side. Between the first forward side inclined wall 75a and the second forward side inclined wall 75b, a first forward side apex part 75c is provided which protrudes most on the forward side in the wiping direction of the wiper blade 40. Here, the first forward side apex part 75c extends parallel to the longitudinal direction of the wiper blade 40.

The first block side forward wall WL1 corresponds to a first facing wall in the disclosure, the first forward side inclined wall 75a corresponds to a first inclined surface in the disclosure, the second forward side inclined wall 75b corresponds to a second inclined surface in the disclosure, and the first forward side apex part 75c corresponds to an apex part in the disclosure.

As shown in FIG. 7 to FIG. 9, on the backward side of the first block part 73 in the wiping direction of the wiper blade 40, the first block side backward wall WL2 is provided. The first block side backward wall WL2 enters inside the first connecting wall 51a and the second connecting wall 51b, so as to face the second connecting wall 51b.

The first block side backward wall WL2 includes a first backward side inclined wall 76a and a second backward side inclined wall 76b. Specifically, the first backward side inclined wall 76a is arranged on the rear glass GS side of the first block part 73, and the second backward side inclined wall 76b is arranged on a side opposite to the rear glass GS side of the first block part 73.

Furthermore, like the first forward side inclined wall 75a and the second forward side inclined wall 75b, the first backward side inclined wall 76a and the second backward side inclined wall 76b are also inclined at an inclination angle of α degrees with respect to the vertical direction of the rear glass GS. The first backward side inclined wall 76a faces toward the rear glass GS side, and the second backward side inclined wall 76b faces toward a side opposite to the rear glass GS side. Between the first backward side inclined wall 76a and the second backward side inclined wall 76b, a first backward side apex part 76c is provided which protrudes most on the backward side in the wiping direction of the wiper blade 40. Here, the first backward side apex part 76c extends parallel to the longitudinal direction of the wiper blade 40.

The first block side backward wall WL2 corresponds to a second facing wall in the disclosure, the first backward side inclined wall 76a corresponds to the first inclined surface in the disclosure, the second backward side inclined wall 76b corresponds to the second inclined surface in the disclosure, and the first backward side apex part 76c corresponds to the apex part in the disclosure.

### <Second Block Part>

As shown in FIG. 7 and FIG. 8, with the pair of holding claws 71 as the center, a second block part 77, which is formed in a substantially hollow box shape like the first block part 73, is provided on the longitudinal base end side (right side in the figure) of the connecting body 70. That is, the first block part 73 and the second block part 77 are arranged on both sides of the pair of holding claws 71 in the longitudinal direction of the wiper blade 40. The second block part 77 is a portion that extends into the base end side of the wiper arm 30 beyond the connecting shaft part 52 between the first connecting wall 51a and second connecting wall 51b of the arm side connecting member 50.

Here, in the longitudinal direction of the wiper blade 40, a second gap 78 is provided between the second block part 77 and the holding claw 71. Like the first gap 74, the second gap 78 allows elastic deformation of the holding claw 71.

As shown in FIG. 7 to FIG. 9, on the forward side of the second block part 77 in the wiping direction of the wiper blade 40, a second block side forward wall WL3 is provided. The second block side forward wall WL3 enters inside the first connecting wall 51a and the second connecting wall 51b, so as to face the first connecting wall 51a.

The second block side forward wall WL3 includes a first forward side inclined wall 79a and a second forward side inclined wall 79b. Specifically, the first forward side inclined wall 79a is arranged on the rear glass GS side of the second block part 77, and the second forward side inclined wall 79b is arranged on a side opposite to the rear glass GS side of the second block part 77.

Furthermore, like the first forward side inclined wall 75a and the second forward side inclined wall 75b, the first forward side inclined wall 79a and the second forward side inclined wall 79b are also inclined at an inclination angle of α degrees with respect to the vertical direction of the rear glass GS. The first forward side inclined wall 79a faces toward the rear glass GS side, and the second forward side inclined wall 79b faces toward a side opposite to the rear glass GS side. Between the first forward side inclined wall 79a and the second forward side inclined wall 79b, a second forward side apex part 79c is provided which protrudes most on the forward side in the wiping direction of the wiper blade 40. Here, the second forward side apex part 79c extends parallel to the longitudinal direction of the wiper blade 40.

The second block side forward wall WL3 corresponds to the first facing wall in the disclosure, the first forward side inclined wall 79a corresponds to the first inclined surface in the disclosure, the second forward side inclined wall 79b corresponds to the second inclined surface in the disclosure, and the second forward side apex part 79c corresponds to the apex part in the disclosure.

As shown in FIG. 7 to FIG. 9, on the backward side of the second block part 77 in the wiping direction of the wiper blade 40, a second block side backward wall WL4 is provided. The second block side backward wall WL4 enters inside the first connecting wall 51a and the second connecting wall 51b, so as to face the second connecting wall 51b.

The second block side backward wall WL4 includes a first backward side inclined wall 80a and a second backward side inclined wall 80b. Specifically, the first backward side inclined wall 80a is arranged on the rear glass GS side of the second block part 77, and the second backward side inclined wall 80b is arranged on a side opposite to the rear glass GS side of the second block part 77.

Furthermore, like the first forward side inclined wall 75a and the second forward side inclined wall 75b, the first backward side inclined wall 80a and the second backward side inclined wall 80b are also inclined at an inclination angle of α degrees with respect to the vertical direction of the rear glass GS. The first backward side inclined wall 80a faces toward the rear glass GS side, and the second backward side inclined wall 80b faces toward a side opposite to the rear glass GS side. Between the first backward side inclined wall 80a and the second backward side inclined wall 80b, a second backward side apex part 80c is provided which protrudes most on the backward side in the wiping direction of the wiper blade 40. Here, the second backward side apex part 80c extends parallel to the longitudinal direction of the wiper blade 40.

Here, as shown in FIG. 8, in the longitudinal direction of the wiper blade 40, a dimension S1 between each of the first block part 73 and second block part 77 and the holding claw 71 is smaller than a dimension S2 between the pair of holding claws 71 (S1<S2). Accordingly, the connecting shaft part 52 can be reliably mounted between the pair of holding claws 71 without an error (structure for preventing incorrect assembly).

The first block part 73 and the second block part 77 have mirror-symmetrical shapes across the pair of holding claws 71 in the longitudinal direction of the wiper blade 40. Hence, in FIG. 9, the first forward side inclined wall 79a, second forward side inclined wall 79b and second forward side apex part 79c of the second block part 77, and the first backward side inclined wall 80a, second backward side inclined wall 80b and second backward side apex part 80c of the second block part 77 are indicated by reference numerals in parentheses.

As shown in FIG. 8, in the wiping direction of the wiper blade 40, a distance between the first forward side apex part 75c and the first backward side apex part 76c, and a distance between the second forward side apex part 79c and the second backward side apex part 80c are both W1. The distance W1 is substantially equal to a distance between the first connecting wall 51a and the second connecting wall 51b (see FIG. 6) of the wiper arm 30 in the wiping direction of the wiper blade 40. Thus, rattling of the wiper blade 40 with respect to the wiper arm 30 in the wiping direction of the wiper blade 40 is suppressed.

Furthermore, as shown in FIG. 8, in the wiping direction of the wiper blade 40, a width dimension of the pair of holding claws 71 is W2, which is smaller than the distance W1 mentioned above (W2<W1). That is, the pair of holding claws 71 are arranged at a position recessed in the wiping direction of the wiper blade 40 from the first block side forward wall WL1, the second block side forward wall WL3, the first block side backward wall WL2, and the second block side backward wall WL4.

Accordingly, in the wiping direction of the wiper blade 40, a predetermined gap CL (see FIG. 3) is provided between the pair of holding claws 71 and each of the first connecting wall 51a and second connecting wall 51b. Here, as shown in FIG. 6, during injection molding of the wiper arm 30, a parting line PL (only shown on the second connecting wall 51b side in the figure) occurs on the surfaces of the first connecting wall 51a and second connecting wall 51b due to a mold for molding the connecting shaft part 52. Thus, by providing the predetermined gap CL, contact of the pair of holding claws 71 with the parting line PL of the wiper arm 30 can be prevented.

Accordingly, regardless of the presence or absence of the parting line PL, each inclined wall (75a, 75b, 76a, 76b, 79a, 79b, 80a, 80b) is reliably able to abut against the first connecting wall 51a and the second connecting wall 51b. Thus, regardless of molding errors, the wiper blade 40 can be inclined at a predetermined angle with respect to the wiper arm 30, and consequently, the wiping performance of the wiper device 10 can be improved.

As shown in FIG. 7 and FIG. 9, ends 75d, 76d, 79d, and 80d on the rear glass GS side and the ends 75e, 76e, 79e, and 80e on a side opposite to the rear glass GS side of the first block side forward wall WL1, second block side forward wall WL3, first block side backward wall WL2 and second block side backward wall WL4 extend parallel to the longitudinal direction of the wiper blade 40.

Accordingly, the area of each inclined wall (75a, 75b, 76a, 76b, 79a, 79b, 80a, 80b) can be increased, making it possible to secure sufficient contact area with the first connecting wall 51a and second connecting wall 51b of the wiper arm 30. Thus, an inclination angle of the wiper blade 40 with respect to the wiper arm 30 can be further accurately restricted.

### <Forward and Backward Wiping Operation>

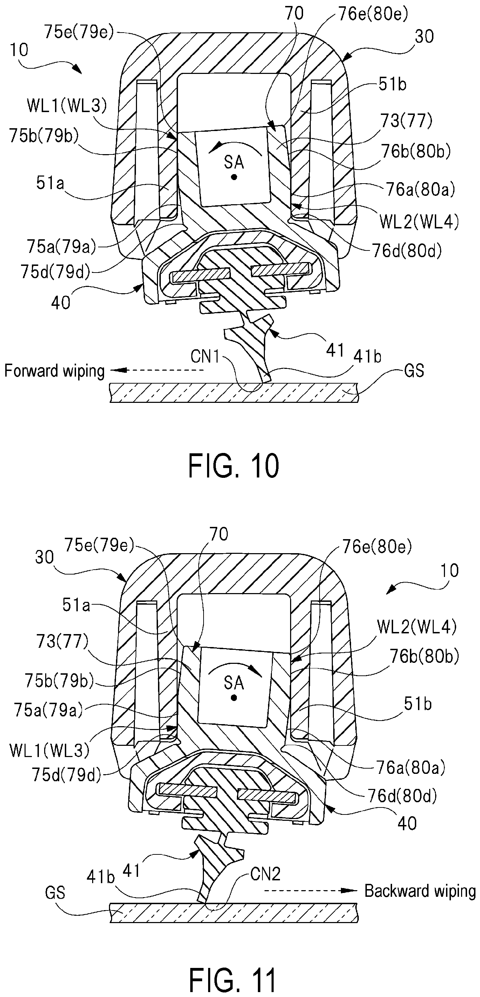

FIG. 10 illustrates an inclination state of the wiper blade during forward wiping, and FIG. 11 illustrates an inclination state of the wiper blade during backward wiping.

When the rotating shaft (not shown) of the wiper motor is rotated in a positive direction, the wiper device 10 performs a forward wiping operation as indicated by a broken line arrow in FIG. 10. Then, the wiper blade 40 is inclined in a counterclockwise direction (one direction) as indicated by a solid arrow about a tilting center SA with respect to the wiper arm 30. The inclination angle of the wiper blade 40 with respect to the wiper arm 30 at this time becomes α degrees with respect to a neutral state shown in FIG. 3 and FIG. 4.

In this way, during the forward wiping operation of the wiper device 10, the connecting body 70 forming the blade side connecting member 60 is able to be inclined in the wiping direction of the wiper blade 40 inside the first connecting wall 51a and second connecting wall 51b provided on the wiper arm 30.

When the wiper blade 40 is inclined in the counterclockwise direction about the tilting center SA in the wiping direction of the wiper blade 40 with respect to the wiper arm 30, the second forward side inclined wall 75b of the first block side forward wall WL1 and the second forward side inclined wall 79b of the second block side forward wall WL3 each abut against the first connecting wall 51a. The first backward side inclined wall 76a of the first block side backward wall WL2 and the first backward side inclined wall 80a of the second block side backward wall WL4 abut against the second connecting wall 51b.

Accordingly, as shown in FIG. 10, the first corner part CN1 of the tip of the lip 41b of the blade rubber 41 reliably makes sliding contact with the rear glass GS. Accordingly, chattering of the blade rubber 41 can be suppressed, and rainwater or dust or the like adhering to the rear glass GS can be cleanly wiped off.

When the rotating shaft (not shown) of the wiper motor is rotated in a reverse direction, the wiper device 10 is reversely operated from the position (forward wiping) shown in FIG. 10, and performs a backward wiping operation as indicated by a broken line arrow in FIG. 11. Then, the wiper blade 40 is inclined in a clockwise direction (other direction) as indicated by a solid arrow about the tilting center SA with respect to the wiper arm 30. The inclination angle of the wiper blade 40 with respect to the wiper arm 30 at this time becomes α degrees×2 (about 6 degrees) with respect to the state shown in FIG. 10.

In this way, during the backward wiping operation of the wiper device 10, the connecting body 70 forming the blade side connecting member 60 is able to be inclined in the wiping direction of the wiper blade 40 inside the first connecting wall 51a and second connecting wall 51b provided on the wiper arm 30.

When the wiper blade 40 is inclined in the clockwise direction about the tilting center SA in the wiping direction of the wiper blade 40 with respect to the wiper arm 30, the first forward side inclined wall 75a of the first block side forward wall WL1 and the first forward side inclined wall 79a of the second block side forward wall WL3 each abut against the first connecting wall 51a. The second backward side inclined wall 76b of the first block side backward wall WL2 and the second backward side inclined wall 80b of the second block side backward wall WL4 abut against the second connecting wall 51b.

Accordingly, as shown in FIG. 11, the second corner part CN2 of the tip of the lip 41b of the blade rubber 41 makes sliding contact with the rear glass GS at an appropriate contact angle. Accordingly, chattering of the blade rubber 41 can be suppressed, and rainwater or dust or the like adhering to the rear glass GS can be cleanly wiped off.

In FIG. 10 and FIG. 11, as in FIG. 9, the first forward side inclined wall 79a, second forward side inclined wall 79b and the second forward side apex part 79c of the second block part 77, and the first backward side inclined wall 80a, second backward side inclined wall 80b and the second backward side apex part 80c of the second block part 77 are indicated by reference numerals in parentheses.

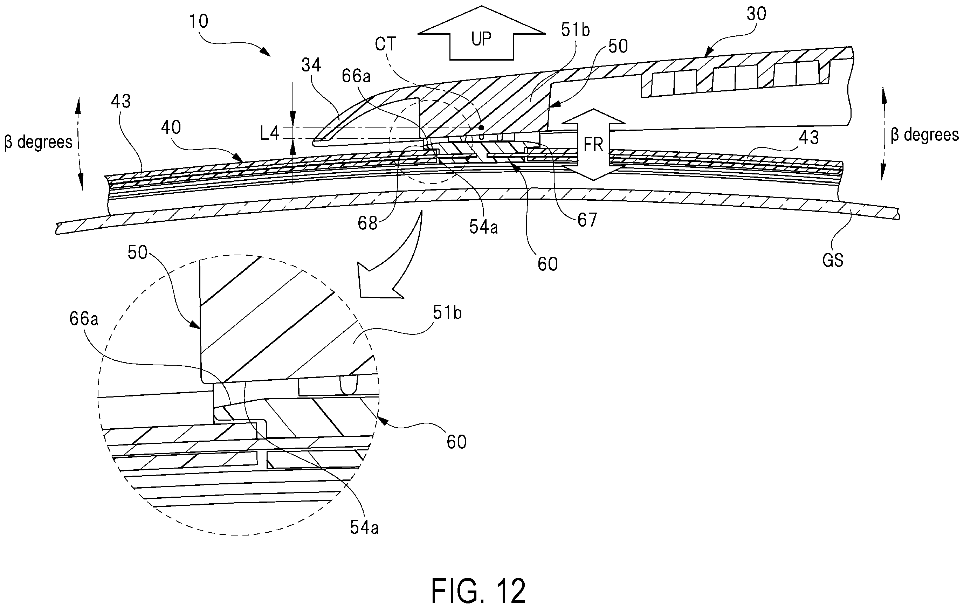

Here, as shown in FIG. 10 and FIG. 11, during the wiping operation of the wiper blade 40 in the wiper device 10, the wiper blade 40 and the wiper arm 30 are rotated with respect to each other by a rotation angle of β degrees (about 5 degrees) in accordance with the curvature of the rear glass GS in the clockwise and counterclockwise directions about the axial center CT, as shown in FIG. 12. At this time, the tip side or base end side of the wiper blade 40 does not contact the wiper arm 30, ensuring sufficient wiping performance of the wiper blade 40.

Furthermore, in the vicinity of the connecting shaft part 52 and the pair of holding claws 71 with the axial center CT as the center, the first block part 73 and second block part 77 having inclined walls (75a, 75b, 76a, 76b, 79a, 79b, 80a, 80b) are provided on the forward side and backward side. Specifically, in the longitudinal direction of the wiper blade 40, the inclined walls (75a, 75b, 76a, 76b, 79a, 79b, 80a, 80b) are arranged on both sides of the connecting shaft part 52 and the pair of holding claws 71 and on the forward side and backward side.

Accordingly, even if the wiper blade 40 and the wiper arm 30 are rotated with respect to each other by a rotation angle of β degrees in the clockwise and counterclockwise directions about the axial center CT as shown in FIG. 12, the blade rubber 41 of the wiper blade 40 and each inclined wall (75a, 75b, 76a, 76b, 79a, 79b, 80a, 80b) integrally operate. That is, even if the rotation angle of the wiper blade 40 and the wiper arm 30 changes, the inclination direction of each inclined wall (75a, 75b, 76a, 76b, 79a, 79b, 80a, 80b) with respect to the longitudinal direction of the wiper blade 40 does not change.

Thus, during the wiping operation of the wiper blade 40, the inclination angle of the wiper blade 40 with respect to the wiper arm 30 can be relatively appropriately restricted.

The rotation angle of β degrees of the wiper blade 40 with respect to the wiper arm 30 during the wiping operation of the wiper blade 40 (see FIG. 12) corresponds to a predetermined angle range in the disclosure.

### <Standing Operation>

FIG. 12 is a diagram showing a state of a connected portion of the wiper blade during wiping.

As indicated by a white arrow in FIG. 12, when the user grasps and lifts the tip side of the wiper arm 30, the wiper blade 40 is also lifted from the rear glass GS. Accordingly, the wiper blade 40 is moved (made to stand) in a direction away from the rear glass GS, which, for example, makes it possible to remove snow accumulated on the rear glass GS.

At this time, the wiper arm 30 can be lifted with a lifting load UP in a substantially vertical direction with respect to the rear glass GS. Here, the lifting load UP is a force of sufficient magnitude to resist the spring force of a tension spring (not shown). A pull-out load FR required to pull out the connecting shaft part 52 (see FIG. 2) of the arm side connecting member 50 from the pair of holding claws 71 (see FIG. 2) of the blade side connecting member 60 is a load sufficiently larger than the lifting load UP. Thus, for example, even if the wiper blade 40 is stuck to the rear glass GS due to freezing, an operation of lifting the wiper arm 30 and lifting the wiper arm 30 including the wiper blade 40 with respect to the rear glass GS does not easily detach the wiper blade 40 from the wiper arm 30.

As shown in FIG. 12, during wiping of the wiper blade 40 before lifting of the wiper arm 30, the first tip side abutment part 53a, second tip side abutment part 54a, first base end side abutment part 53b and second base end side abutment part 54b (see FIG. 6) of the arm side connecting member 50 do not contact the first tip side inclined surface 65a, second tip side inclined surface 66a, first base end side inclined surface 65b and second base end side inclined surface 66b (see FIG. 8) of the blade side connecting member 60.

### <Maintenance Work>

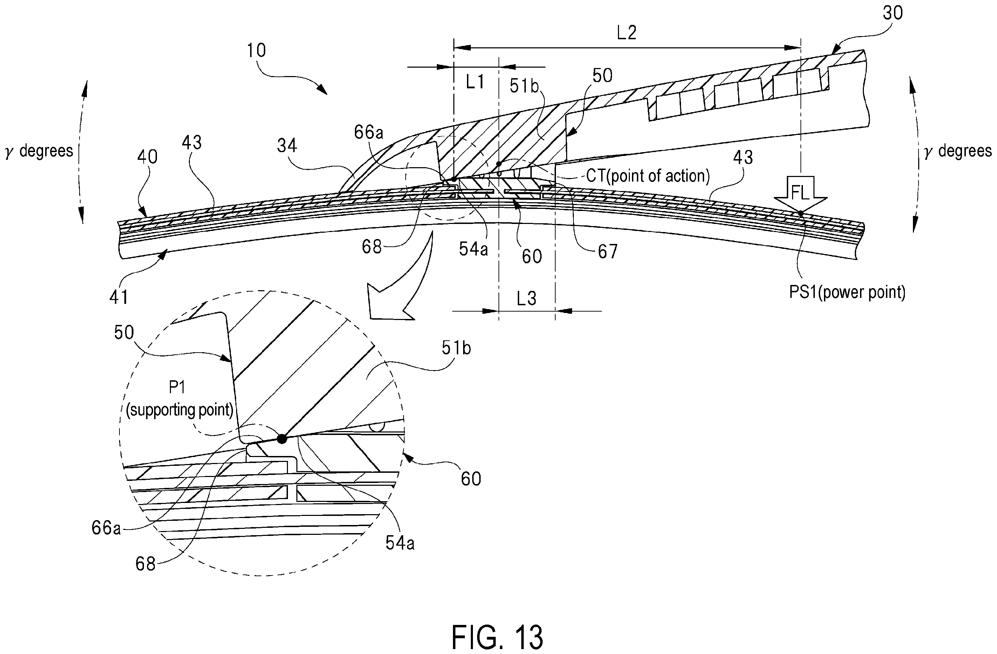

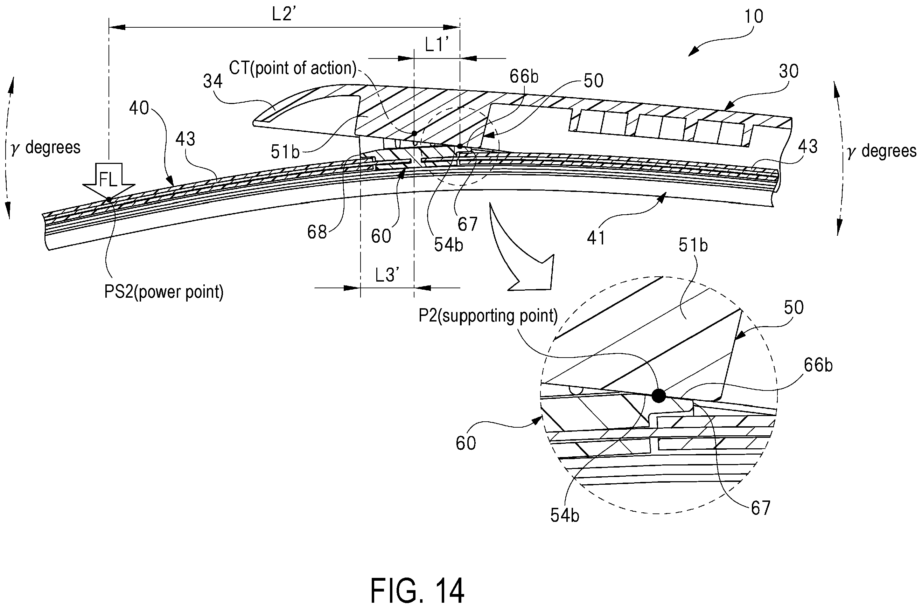

FIG. 13 is a diagram showing one state of a connected portion during maintenance, and FIG. 14 is a diagram showing another state of a connected portion during maintenance.

To perform maintenance on the wiper device 10 in order to replace the wiper blade 40 or the blade rubber 41 of the wiper blade 40, it is necessary to detach the wiper blade 40 from the wiper arm 30. Specifically, first, as shown in FIG. 12, the tip side of the wiper arm 30 is grasped and lifted by the user, and a state (state of being pulled up in the standing direction) is achieved in which the wiper blade 40 is pulled away from the rear glass GS.

Accordingly, as shown in FIG. 13, the wiper blade 40 and the wiper arm 30 are rotatable with respect to each other in the clockwise and counterclockwise directions about the axial center CT by a rotation angle of γ degrees (about 7 degrees) which is larger than the rotation angle of β degrees (see FIG. 12) (γ degrees>β degrees). That is, the wiper blade 40 is rotatable with respect to the wiper arm 30 by a rotation angle exceeding β degrees. The reason is that the state in which the wiper blade 40 is restricted from rotating by the rear glass GS is canceled.

Next, a state is achieved in which the wiper blade 40 is pulled away from the rear glass GS, and the wiper blade 40 is rotated with respect to the wiper arm 30 by a rotation angle exceeding β degrees. The pressing part PS1 of the rubber holder 43 arranged on the base end side of the wiper blade 40 is pressed, and the wiper blade 40 is moved in a direction away from the wiper arm 30 as indicated by a white arrow.

Since the wiper blade 40 is rotated with respect to the wiper arm 30 by a rotation angle exceeding β degrees, the first tip side abutment part 53a and second tip side abutment part 54a (see FIG. 6) of the arm side connecting member 50 abut against by line contact with the first tip side inclined surface 65a and second tip side inclined surface 66a (see FIG. 8) of the blade side connecting member 60.

In a state (state shown in FIG. 13) in which the first tip side abutment part 53a and second tip side abutment part 54a are in contact with the first tip side inclined surface 65a and second tip side inclined surface 66a, even if the arm tip 34 comes into contact with the wiper blade 40, the arm tip 34 does not contact the wiper blade 40 with strong force. Thus, no damage is caused to the wiper blade 40.

Subsequently, as shown in FIG. 13, by further pressing down the pressing part PS1 of the rubber holder 43, the wiper blade 40 is detached from the wiper arm 30 by a pressing load FL which is less than the pull-out load FR (see FIG. 12) required to pull out the connecting shaft part 52 (see FIG. 2) from the pair of holding claws 71 (see FIG. 2) (FL<FR).

Here, a position of the pressing part PS1 serves as a "power point" in the principle of leverage, a position where the first tip side abutment part 53a and the second tip side abutment part 54a abut against the first tip side inclined surface 65a and the second tip side inclined surface 66a serves as a "supporting point (reference numeral P1 in the figure)" in the principle of leverage, and a position (position of the axial center CT) where the connecting shaft part 52 and the pair of holding claws 71 are connected serves as a "point of action" in the principle of leverage.

As shown in FIG. 13, in the longitudinal direction of the wiper blade 40, a length L1 of a first line segment connecting the position (point of action) of the axial center CT and the position (supporting point at a longitudinal central position of the position abutted by line contact) where the first tip side abutment part 53a and the second tip side abutment part 54a abut against the first tip side inclined surface 65a and the second tip side inclined surface 66a is shorter than a length L2 of a second line segment connecting the position (power point) of the pressing part PS1 and the position (supporting point at a longitudinal central position of the position abutted by line contact) where the first tip side abutment part 53a and the second tip side abutment part 54a abut against the first tip side inclined surface 65a and the second tip side inclined surface 66a (L1<L2). Accordingly, the principle of leverage in which the pressing load FL is less than the pull-out load FR is realized.

Furthermore, a length L3 of a third line segment connecting the position (point of action) of the axial center CT and a position of a connecting member base end 67 on a side opposite to the first tip side inclined surface 65a and second tip side inclined surface 66a in the longitudinal direction of the blade side connecting member 60 is equal to or larger than the length L1 of the first line segment (L1≤L3). Since it is assumed that the user holds the rubber holder 43 during maintenance of the wiper device 10, in most cases, the pressing part PS1 is arranged on the longitudinal base end side with respect to the blade side connecting member 60. Thus, by setting L1≤L3, a difference between the length L2 of the second line segment and the length L1 of the first line segment can be made twice as large or more, and consequently, the pressing load FL can be reduced to half or less of the pull-out load FR.

The connecting member base end 67 corresponds to a connecting member end in the disclosure.

In this way, by utilizing the "principle of leverage," the wiper blade 40 can be detached from the wiper arm 30 with a relatively small pressing load FL. Thus, it is possible to improve the maintainability of the wiper device 10.

As shown in FIG. 12, the first tip side inclined surface 65a and second tip side inclined surface 66a provided on the blade side connecting member 60 of the wiper blade 40 are arranged on the rear glass GS side (lower side in the figure) with respect to the axial center CT. Specifically, in the vertical direction of the rear glass GS, the first tip side inclined surface 65a and second tip side inclined surface 66a and the axial center CT are separated by a separation distance L4. The separation distance L4 is shorter than the length L1 of the first line segment (see FIG. 13).

Accordingly, during the wiping operation of the wiper blade 40, the rotation angle of the wiper blade 40 with respect to the wiper arm 30 can be set to β degrees by which sufficient wiping performance of the wiper blade 40 can be ensured. On the other hand, during maintenance of the wiper device 10, it is possible to set the rotation angle to γ degrees by which the wiper blade 40 can be detached from the wiper arm 30.

During maintenance of the wiper device 10, the user may press the pressing part PS2 in a longitudinal central part of the rubber holder 43 arranged on the longitudinal tip side of the wiper blade 40, instead of the pressing part PS1 in the longitudinal central part of the rubber holder 43 arranged on the longitudinal base end side of the wiper blade 40.

In this case, as shown in FIG. 6, the first base end side abutment part 53b and second base end side abutment part 54b on the longitudinal base end side (right side in the figure) of the first sidewall end 53 and second sidewall end 54 are able to abut against the first base end side inclined surface 65b and second base end side inclined surface 66b (see FIG. 8), respectively. This also allows the wiper blade 40 to be detached from the wiper arm 30 with a relatively small pressing load FL (see FIG. 14).

Here, as shown in FIG. 14, a position of the pressing part PS2 serves as a "power point" in the principle of leverage, a position where the first base end side abutment part 53b and the second base end side abutment part 54b abut against the first base end side inclined surface 65b and the second base end side inclined surface 66b serves as a "supporting point (reference numeral P2 in the figure)" in the principle of leverage, and a position (position of the axial center CT) where the connecting shaft part 52 and the pair of holding claws 71 are connected serves as a "point of action" in the principle of leverage.

As shown in FIG. 14, in the longitudinal direction of the wiper blade 40, a length L1' of a first line segment connecting the position (point of action) of the axial center CT and the position (supporting point at a longitudinal central position of the position abutted by line contact) where the first base end side abutment part 53b and the second base end side abutment part 54b abut against the first base end side inclined surface 65b and the second base end side inclined surface 66b is shorter than a length L2' of a second line segment connecting the position (power point) of the pressing part PS2 and the position (supporting point at a longitudinal central position of the position abutted by line contact) where the first base end side abutment part 53b and the second base end side abutment part 54b abut against the first base end side inclined surface 65b and the second base end side inclined surface 66b (L1'<L2'). Accordingly, the principle of leverage in which the pressing load FL is less than the pull-out load FR is realized.

Furthermore, a length L3' of a third line segment connecting the position (point of action) of the axial center CT and a position of a connecting member tip 68 on a side opposite to the first base end side inclined surface 65b and second base end side inclined surface 66b in the longitudinal direction of the blade side connecting member 60 is equal to or larger than the length L1' of the first line segment (L1'≤L3'). Since it is assumed that the user holds the rubber holder 43 during maintenance of the wiper device 10, in most cases, the pressing part PS2 is arranged on the longitudinal tip side with respect to the blade side connecting member 60. Thus, by setting L1'≤L3', a difference between the length L2' of the second line segment and the length L1' of the first line segment can be made twice as large or more, and consequently, the pressing load FL can be reduced to half or less of the pull-out load FR.

The connecting member tip 68 corresponds to the connecting member end in the disclosure.

In this way, even in the case of pressing the pressing part PS2, by utilizing the "principle of leverage," the wiper blade 40 can be detached from the wiper arm 30 with a relatively small pressing load FL. Thus, it is possible to improve the maintainability of the wiper device 10.

Since the wiper blade 40 can be detached from the wiper arm 30 by pressing either the pressing part PS1 or the pressing part PS2, it is possible to select either the pressing part PS1 or the pressing part PS2 according to user preference (such as dominant hand).

As shown in FIG. 7, by making the blade side connecting member 60 in a symmetrical shape centered on the pair of holding claws 71 in the longitudinal direction thereof, the manufacturability of the blade side connecting member 60 can be improved, the directionality of parts can be eliminated and the ease of assembly can be improved.

Furthermore, regardless of whether a lock back specification is used, it is possible to easily detach the wiper blade 40 from the wiper arm 30. Specifically, if no lock back specification is used, since the angle allowing standing of the wiper arm is small, it is difficult to detach the wiper blade 40 from the wiper arm 30 by using the pressing part PS1. In this case, since the longitudinal tip side of the wiper blade 40 is easy to grasp, the wiper blade 40 may be detached from the wiper arm 30 by using the pressing part PS2.

As described in detail above, according to the present embodiment, during the wiping operation of the wiper blade 40, the wiper arm 30 and the wiper blade 40 are rotated with respect to each other by a rotation angle of β degrees about the axial center CT. The wiper arm 30 and the wiper blade 40 respectively include the first tip side abutment part 53a and second tip side abutment part 54a and the first tip side inclined surface 65a and second tip side inclined surface 66a that abut against each other during rotation by a rotation angle exceeding β degrees.

Accordingly, when the wiper blade 40 is rotated by a rotation angle exceeding β degrees with respect to the wiper arm 30, the first tip side abutment part 53a and second tip side abutment part 54a abut against the first tip side inclined surface 65a and second tip side inclined surface 66a, or the first base end side abutment part 53b and second base end side abutment part 54b abut against the first base end side inclined surface 65b and second base end side inclined surface 66b, and the wiper blade 40 can be detached from the wiper arm 30 with a relatively small pressing load FL according to the "principle of leverage." Thus, it is possible to improve the maintainability of the wiper device 10.

On the other hand, a pull-out load required to pull out the connecting shaft part 52 from the pair of holding claws 71 can be made sufficiently larger than a lifting load LD when the wiper arm 30 is lifted in a substantially vertical direction with respect to the rear glass GS. Accordingly, it is possible to prevent the wiper blade 40 from easily detaching from the wiper arm 30. For example, even if the user performs a standing operation on the wiper arm 30 to peel off the wiper blade 40 that has stuck to the rear glass GS due to freezing in winter, the wiper blade 40 does not detach from the wiper arm 30.

Thus, while maintainability is ensured, the wiper blade 40 can be prevented from detaching from the wiper arm 30 contrary to the intention of the user.

According to the present embodiment, the wiper blade 40 is provided with the blade side connecting member 60 extending in the longitudinal direction of the wiper blade 40 and in which the pair of holding claws 71 and the first tip side inclined surface 65a and the second tip side inclined surface 66a (first base end side inclined surface 65b and second base end side inclined surface 66b) are arranged side by side in the longitudinal direction. In the longitudinal direction of the blade side connecting member 60, on a side opposite to a side where the first tip side inclined surface 65a and the second tip side inclined surface 66a (first base end side inclined surface 65b and second base end side inclined surface 66b) are arranged, the connecting member base end 67 (connecting member tip 68) is provided. The length L3 (L3') of the third line segment connecting the axial center CT and the connecting member base end 67 (connecting member tip 68) is equal to or larger than the length L1 (L1') of the first line segment connecting the axial center CT and the first tip side inclined surface 65a and the second tip side inclined surface 66a (first base end side inclined surface 65b and second base end side inclined surface 66b) (L1≤L3 (L1'≤L3')).

Accordingly, the pressing load FL can be reduced to 1/2 or less of the pull-out load FR. Thus, it is possible to further improve maintainability.

Furthermore, according to the present embodiment, the first tip side abutment part 53a and second tip side abutment part 54a and the first base end side abutment part 53b and second base end side abutment part 54b are respectively provided on both sides of the connecting shaft part 52 in the longitudinal direction of the wiper blade 40. The first tip side inclined surface 65a and second tip side inclined surface 66a and the first base end side inclined surface 65b and second base end side inclined surface 66b are respectively provided on both sides of the pair of holding claws 71 in the longitudinal direction of the wiper blade 40.

Accordingly, it is possible for the user to select and operate either the pressing part PS1 or the pressing part PS2 according to their preference (such as dominant hand), and maintainability can be improved. The blade side connecting member 60 can be made in a symmetrical shape in the longitudinal direction thereof. While the manufacturability of the blade side connecting member 60 is improved, the directionality of parts can be eliminated and the ease of assembly can be improved. Furthermore, regardless of whether a lock back specification is used, the wiper blade 40 can be easily detached from the wiper arm 30, which also improves maintainability.

According to the present embodiment, the first tip side inclined surface 65a, second tip side inclined surface 66a, first base end side inclined surface 65b and second base end side inclined surface 66b provided on the wiper blade 40 are arranged on the rear glass GS side from the axial center CT.

Accordingly, the rotation angle of the wiper blade 40 with respect to the wiper arm 30 during the wiping operation of the wiper blade 40 can be set to β degrees, making it possible to ensure sufficient wiping performance of the wiper blade 40. By setting the rotation angle of the wiper blade 40 with respect to the wiper arm 30 during maintenance of the wiper device 10 to γ degrees, the wiper blade 40 can be easily detached from the wiper arm 30 according to the "principle of leverage."

Furthermore, according to the present embodiment, the wiper arm 30 is provided with: the forward sidewall 32a and the backward sidewall 32b as a pair, arranged facing each other in the wiping direction of the wiper blade 40; and the first connecting wall 51a and the second connecting wall 51b as a pair, arranged between the forward sidewall 32a and the backward sidewall 32b as a pair, and supporting the connecting shaft part 52. The first tip side abutment part 53a and second tip side abutment part 54a and the first base end side abutment part 53b and second base end side abutment part 54b are provided on the surfaces of the first connecting wall 51a and second connecting wall 51b as a pair facing the rear glass GS, and are parallel to the surfaces of the forward sidewall 32a and backward sidewall 32b as a pair facing the rear glass GS.

Accordingly, when the wiper arm 30 is viewed from the wiping direction of the wiper blade 40, it is possible to either conceal the first tip side abutment part 53a and second tip side abutment part 54a and the first base end side abutment part 53b and second base end side abutment part 54b with the forward sidewall 32a and backward sidewall 32b, or to form the same along the forward sidewall 32a and backward sidewall 32b. Accordingly, the overall appearance of the wiper device 10 can be improved.

According to the present embodiment, in the wiper blade 40, provided are the first tip side inclined surface 65a, second tip side inclined surface 66a, first base end side inclined surface 65b and second base end side inclined surface 66b that are inclined to approach the rear glass GS as moving away from the pair of holding claws 71 in the longitudinal direction of the wiper blade 40.

Accordingly, it is possible to set the rotation angle of the wiper blade 40 with respect to the wiper arm 30 during the wiping operation of the wiper blade 40 to β degrees being a sufficient angle range, and sufficient wiping performance of the wiper blade 40 can be ensured.

Furthermore, according to the present embodiment, when the wiper arm 30 and the wiper blade 40 are rotated in one direction by a rotation angle exceeding β degrees, the first tip side abutment part 53a and the second tip side abutment part 54a make line contact with the first tip side inclined surface 65a and second tip side inclined surface 66a. When the wiper arm 30 and the wiper blade 40 are rotated in the other direction by a rotation angle exceeding β degrees, the first base end side abutment part 53b and second base end side abutment part 54b make line contact with the first base end side inclined surface 65b and second base end side inclined surface 66b.

Accordingly, the first tip side abutment part 53a and second tip side abutment part 54a and the first tip side inclined surface 65a and second tip side inclined surface 66a, as well as the first base end side abutment part 53b and second base end side abutment part 54b and the first base end side inclined surface 65b and second base end side inclined surface 66b, do not need to abut against each other by point contact. Mutual wear between the first tip side abutment part 53a and second tip side abutment part 54a and the first tip side inclined surface 65a and second tip side inclined surface 66a, as well as between the first base end side abutment part 53b and second base end side abutment part 54b and the first base end side inclined surface 65b and second base end side inclined surface 66b can be suppressed. Thus, it is possible to improve the durability of the wiper device 10.

According to the present embodiment, the blade side connecting member 60 includes: the vertebra holding part 61, arranged on the rear glass GS side and holding the blade rubber 41 that wipes the rear glass GS; and the connecting body 70, arranged on a side opposite to the rear glass GS side of the vertebra holding part 61 and including the pair of holding claws 71. On both longitudinal sides of the vertebra holding part 61, the tip T1 and the base end T2 are provided that cover the ends of the rubber holder 43 covering a side opposite to the rear glass GS side of the blade rubber 41. The first tip side inclined surface 65a and second tip side inclined surface 66a are provided on the tip T1, and the first base end side inclined surface 65b and second base end side inclined surface 66b are provided on the base end T2.

Accordingly, the ends of the rubber holder 43 are covered and concealed, a sense of unity between the rubber holder 43 and the vertebra holding part 61 is improved, and consequently, the overall appearance of the wiper device 10 can be improved.

Furthermore, according to the present embodiment, the connecting body 70 is able to be inclined in the wiping direction of the wiper blade 40 inside the first connecting wall 51a and second connecting wall 51b provided as a pair on the wiper arm 30. The vertebra holding part 61 is wider than the connecting body 70 in the wiping direction of the wiper blade 40. The first tip side inclined surface 65a, second tip side inclined surface 66a, first base end side inclined surface 65b and second base end side inclined surface 66b are inclined surfaces that are inclined to approach the rear glass GS as moving away from the connecting body 70 in the wiping direction of the wiper blade 40.

Accordingly, in the case where the connecting body 70 is inclined with respect to the first connecting wall 51a and the second connecting wall 51b, contact between the first connecting wall 51a, second connecting wall 51b, first tip side inclined surface 65a, second tip side inclined surface 66a, first base end side inclined surface 65b and second base end side inclined surface 66b can be prevented. Thus, the wiper blade 40 and the wiper arm 30 can be sufficiently relatively inclined without contacting each other. Consequently, during the forward and backward wiping operation of the wiper device 10, the first corner CN1 and second corner CN2 of the lip 41b can be reliably brought into sliding contact with the rear glass GS. Accordingly, it is possible to relatively cleanly wipe off rainwater or dust or the like adhering to the rear glass GS.

According to the present embodiment, the recessed groove 72 that facilitates bending of each of the pair of holding claws 71 is provided at the base of the pair of holding claws 71.

Accordingly, the stress acting on the base of the pair of holding claws 71 can be dispersed, and damage to the base of the pair of holding claws 71 due to stress concentration can be suppressed. Thus, it is possible to improve the durability of the wiper device 10.

Furthermore, according to the present embodiment, the first block side forward wall WL1 and second block side forward wall WL3 and the first block side backward wall WL2 and second block side backward wall WL4 are respectively arranged on both sides of the pair of holding claws 71 in the longitudinal direction of the wiper blade 40. The first block side forward wall WL1 and second block side forward wall WL3 and the first block side backward wall WL2 and second block side backward wall WL4 are arranged on the rear glass GS side that is wiped by the wiper blade 40, and respectively include the first forward side inclined wall 75a, 79a and the first backward side inclined wall 76a, 80a facing the rear glass GS side, and the second forward side inclined wall 75b, 79b and the second backward side inclined wall 76b, 80b arranged on a side opposite to the rear glass GS side and facing a side opposite to the rear glass GS side. The wiper blade 40 is able to be inclined in the wiping direction of the wiper blade 40 with respect to the wiper arm 30. When the wiper blade 40 is inclined in one direction with respect to the wiper arm 30, the second forward side inclined wall 75b of the first block side forward wall WL1 and the second forward side inclined wall 79b of the second block side forward wall WL3 abut against the first connecting wall 51a, and the first backward side inclined wall 76a of the first block side backward wall WL2 and the first backward side inclined wall 80a of the second block side backward wall WL4 abut against the second connecting wall 51b. When the wiper blade 40 is inclined in the other direction with respect to the wiper arm 30, the first forward side inclined wall 75a of the first block side forward wall WL1 and the first forward side inclined wall 79a of the second block side forward wall WL3 abut against the first connecting wall 51a, and the second backward side inclined wall 76b of the first block side backward wall WL2 and the second backward side inclined wall 80b of the second block side backward wall WL4 abut against the second connecting wall 51b.

Accordingly, the wiper blade 40 can be inclined with respect to the wiper arm 30 in the counterclockwise and clockwise directions about the tilting center SA. Accordingly, during the forward wiping operation and backward wiping operation, it is possible to bring the first corner CN1 and second corner CN2 of the tip of the lip 41b into sliding contact with the rear glass GS at an appropriate contact angle. Thus, while chattering of the blade rubber 41 is suppressed, rainwater or dust or the like adhering to the rear glass GS can be cleanly wiped off.

Even in the case (see FIG. 12) where the wiper blade 40 and the wiper arm 30 are rotated with respect to each other in the clockwise and counterclockwise directions about the axial center CT, the inclination direction of each inclined wall (75a, 75b, 76a, 76b, 79a, 79b, 80a, 80b) with respect to the longitudinal direction of the wiper blade 40 does not change. Accordingly, during the wiping operation of the wiper blade 40, the inclination angle of the wiper blade 40 with respect to the wiper arm 30 can be relatively appropriately restricted.

Furthermore, according to the present embodiment, the pair of holding claws 71 are arranged at a position recessed in the wiping direction of the wiper blade 40 from the first block side forward wall WL 1, the second block side forward wall WL3, the first block side backward wall WL2, and the second block side backward wall WL4.

Accordingly, the pair of holding claws 71 do not need to contact the parting line PL (see FIG. 6) that occurs on the surfaces of the first connecting wall 51a and second connecting wall 51b during injection molding of the wiper arm 30. Accordingly, the wiper blade 40 can be inclined at a predetermined angle with respect to the wiper arm 30, and the wiping performance of the wiper device 10 can be improved.

According to the present embodiment, the ends 75d, 76d, 79d, 80d on the rear glass GS side and ends 75e, 76e, 79e, 80e on a side opposite to the rear glass GS side of the first block side forward wall WL1 and second block side forward wall WL3 and the first block side backward wall WL2 and second block side backward wall WL4 extend parallel to the longitudinal direction of the wiper blade 40.

Accordingly, it is possible to secure sufficient area for each inclined wall (75a, 75b, 76a, 76b, 79a, 79b, 80a, 80b), and the inclination angle of the wiper blade 40 with respect to the wiper arm 30 can be appropriately restricted.

Furthermore, according to the present embodiment, the first forward side apex part 75c is arranged between the first forward side inclined wall 75a and the second forward side inclined wall 75b, the second forward side apex part 79c is arranged between the first forward side inclined wall 79a and the second forward side inclined wall 79b, the first backward side apex part 76c is arranged between the first backward side inclined wall 76a and the second backward side inclined wall 76b, and the second backward side apex part 80c is arranged between the first backward side inclined wall 80a and the second backward side inclined wall 80b. The first forward side apex part 75c, the first backward side apex part 76c, the second forward side apex part 79c, and the second backward side apex part 80c each extend parallel to the longitudinal direction of the wiper blade 40.

Accordingly, it is possible to accurately incline the wiper blade 40 with respect to the wiper arm 30 at predetermined reversal timing on both sides (forward side and backward side) in the wiping direction of the wiper blade 40. Accordingly, the wiping performance of the wiper device 10 can be further improved.

According to the present embodiment, the wiper blade 40 includes the blade side connecting member 60 that extends in the longitudinal direction of the wiper blade 40 and includes the pair of holding claws 71. The blade side connecting member 60 includes: the vertebra holding part 61, arranged on the rear glass GS side and holding the blade rubber 41 that wipes the rear glass GS; and the connecting body 70, arranged on a side opposite to the rear glass GS side of the vertebra holding part 61 and including the pair of holding claws 71, the first block side forward wall WL 1 and second block side forward wall WL3, and the first block side backward wall WL2 and second block side backward wall WL4. On both longitudinal sides of the vertebra holding part 61, the tip T1 and the base end T2 are provided that cover the ends of the rubber holder 43 covering a side opposite to the rear glass GS side of the blade rubber 41. The tip T1 and the base end T2 are arranged at positions corresponding to the first block side forward wall WL1 and second block side forward wall WL3 and the first block side backward wall WL2 and second block side backward wall WL4 in the longitudinal direction of the wiper blade 41.

Accordingly, the ends of the rubber holder 43 can be covered and concealed to obtain a sense of unity, and consequently, the overall appearance of the wiper device 10 can be improved. By providing the tip T1 and the base end T2, the first block side forward wall WL1 and second block side forward wall WL3 and the first block side backward wall WL2 and second block side backward wall WL4 can be increased in size, and consequently, the wiper blade 40 can be stably inclined with respect to the wiper arm 30.

Furthermore, according to the present embodiment, the vertebra holding part 61 is wider than the connecting body 70 in the wiping direction of the wiper blade 40, and includes the first inclined surface 65 and second inclined surface 66 that are inclined to approach the rear glass GS as moving away from the connecting body 70 in the wiping direction of the wiper blade 40.

Accordingly, during tilting (see FIG. 10 and FIG. 11) of the wiper blade 40 with respect to the wiper arm 30 in the wiping direction, contact between the wiper blade 40 and the wiper arm 30 can be avoided, and consequently, the wiping performance of the wiper device 10 can be further improved.

According to the present embodiment, on a side opposite to the rear glass GS side of the tip T1, the first tip side inclined surface 65a and second tip side inclined surface 66a are provided against which the first connecting wall 51a and second connecting wall 51b of the wiper arm 30 abut when the pair of holding claws 71 are detached from the connecting shaft part 52.

Accordingly, the first tip side inclined surface 65a and the second tip side inclined surface 66a can be arranged in the vicinity of the connecting shaft part 52 and the pair of holding claws 71, making it possible to easily detach the connecting shaft part 52 and the pair of holding claws 71 connected by snap-fit, using the "principle of leverage." Thus, the maintainability of the wiper device 10 can be improved.

Furthermore, according to the present embodiment, since the durability of the wiper device 10 can be improved, it is possible to reduce the manufacturing energy required to manufacture the wiper device 10. Thus, particularly Goal 7 ("ensure access to affordable, reliable, sustainable and modern energy for all") and Goal 13 ("take urgent action to combat climate change and its impacts") among the Sustainable Development Goals (SDGs) defined by the United Nations can be achieved.

The disclosure is not limited to the above embodiment, and it goes without saying that various changes can be made without departing from the gist of the disclosure. For example, the above embodiment illustrates that the first tip side abutment part 53a, second tip side abutment part 54a, first base end side abutment part 53b and second base end side abutment part 54b are provided as the first abutment part on the arm side connecting member 50, and the first tip side inclined surface 65a, second tip side inclined surface 66a, first base end side inclined surface 65b and second base end side inclined surface 66b are provided as the second abutment part on the blade side connecting member 60. However, the disclosure is not limited thereto. It is possible to provide only the first tip side abutment part 53a and second tip side abutment part 54a as the first abutment part, and only the first tip side inclined surface 65a and second tip side inclined surface 66a as the second abutment part. It is possible to provide only the first base end side abutment part 53b and second base end side abutment part 54b as the first abutment part, and only the first base end side inclined surface 65b and second base end side inclined surface 66b as the second abutment part.

The above embodiment illustrates that the connecting shaft part (connecting shaft) 52 is provided as the first connecting part on the arm side connecting member 50 of the wiper arm 30, and the pair of holding claws 71 are provided as the second connecting part on the blade side connecting member 60 of the wiper blade 40. However, the disclosure is not limited thereto. The pair of holding claws may be provided as the first connecting part on the arm side connecting member 50 of the wiper arm 30, and a connecting shaft may be provided as the second connecting part on the blade side connecting member 60 of the wiper blade 40. In short, connection shapes of the connected portions may be reversed.

Furthermore, the above embodiment illustrates that, the first tip side inclined surface (inclined surface) 65a, second tip side inclined surface (inclined surface) 66a, first base end side inclined surface (inclined surface) 65b and second base end side inclined surface (inclined surface) 66b as the second abutment part are provided on the vertebra holding part 61, while the first tip side abutment part 53a, second tip side abutment part 54a, first base end side abutment part 53b and second base end side abutment part 54b as the first abutment part are provided to be parallel to the longitudinal direction of the wiper arm 30. However, the disclosure is not limited thereto. The first tip side abutment part 53a, the second tip side abutment part 54a, the first base end side abutment part 53b, and the second base end side abutment part 54b may be inclined, and the first tip side inclined surface 65a, second tip side inclined surface 66a, first base end side inclined surface 65b and second base end side inclined surface 66b may be surfaces that extend parallel to the longitudinal direction of the wiper blade 40. In short, the inclination relationship between the first abutment part and the second abutment part may be reversed.

However, contact portions between the first connecting wall 51a and second connecting wall 51b of the arm side connecting member 50 and the connecting body 70 of the blade side connecting member 60 are portions that support the tilting of the wiper blade 40 with respect to the wiper arm 30. Thus, in order to increase support rigidity of each other, it is desirable to make the contact area between the two as large as possible as an inclination relationship as in the above embodiment. That is, the inclination relationship between the first abutment part and the second abutment part as in the above embodiment enables a strong tilting support structure.

The above embodiment illustrates that the wiper arm 30 is applied to the wiper device 10 that wipes window glass (rear glass) provided on a back door of a vehicle such as an automobile. However, the disclosure is not limited thereto. The wiper arm 30 can also be applied to, for example, a wiper device that wipes front glass of a vehicle such as an automobile, or glass of an aircraft, railway vehicle, construction machinery, or the like.

In addition, the material, shape, dimension, number, installation location or the like of each component in the above embodiment may be arbitrary as long as the disclosure can be achieved, and are not limited to the above embodiment.

### Description of Reference Numerals

10: wiper device; 20: arm head; 21: cover member; 30: wiper arm; 31: top wall; 32a: forward sidewall (outer wall); 32b: backward sidewall (outer wall); 33: arm connecting part; 34: arm tip; 35: spring hook part; 36: reinforcement rib; 40, 41: wiper blade; 41: blade rubber; 41a: blade body; 41b: lip; 41c: neck; 41d: groove; 42: vertebra; 42a: engagement groove; 43: rubber holder; 43a: rubber holder side holding claw; 44: end cap; 50: arm side connecting member; 51a: first connecting wall (sidewall; first sidewall); 51b: second connecting wall (sidewall; second sidewall); 52: connecting shaft part (first connecting part; connecting shaft); 53: first sidewall end; 53a: first tip side abutment part (first abutment part); 53b: first base end side abutment part (first abutment part); 54: second sidewall end; 54a: second tip side abutment part (first abutment part); 54b: second base end side abutment part (first abutment part); 60: blade side connecting member (connecting member); 61: vertebra holding part (blade holding part); 62a: first swelling part; 62b: second swelling part; 63a: first connecting member side holding claw; 63b: second connecting member side holding claw; 64: engagement convex part; 65: first inclined surface (inclined surface); 65a: first tip side inclined surface (second abutment part); 65b: first base end side inclined surface (second abutment part); 66: second inclined surface (inclined surface); 66a: second tip side inclined surface (second abutment part); 66b: second base end side inclined surface (second abutment part); 67: connecting member base end (connecting member end); 68: connecting member tip (connecting member end); 70: connecting body (adapter part); 71: holding claw (second connecting part); 72: recessed groove; 73: first block part; 74: first gap; 75a: first forward side inclined wall (first inclined surface); 75b: second forward side inclined wall (second inclined surface); 75c: first forward side apex part (apex part); 75d: end on rear glass side; 75e: end on side opposite to rear glass side; 76a: first backward side inclined wall (first inclined surface); 76b: second backward side inclined wall (second inclined surface); 76c: first backward side apex part (apex part); 76d: end on rear glass side; 76e: end on side opposite to rear glass side; 77: second block part; 78: second gap; 79a: first forward side inclined wall (first inclined surface); 79b: second forward side inclined wall (second inclined surface); 79c: second forward side apex part (apex part); 79d: end on rear glass side; 79e: end on side opposite to rear glass side; 80a: first backward side inclined wall (first inclined surface); 80b: second backward side inclined wall (second inclined surface); 80c: second backward side apex part (apex part); 80d: end on rear glass side; 80e: end on side opposite to rear glass side; CL: gap; CN1: first corner part; CN2: second corner part; CT: axial center; FL: pressing load; G1: forward side gap; G2: backward side gap; GS: rear glass (wiping surface); L1, L1': length of first segment; L2, L2': length of second segment; L3, L3': length of third segment; L4: separation distance; LD: lifting load; PL: parting line; PS1 and PS2: pressing part; SA: tilting center; T1: tip (holder covering part); T2: base end (holder covering part); WL1: first block side forward wall (first facing wall); WL2: first block side backward wall (second facing wall); WL3: second block side forward wall (first facing wall); WL4: second block side backward wall (second facing wall); α degrees: inclination angle; β degrees: rotation angle (predetermined angle range); γ degrees: rotation angle

## Claims

1. A wiper device (10), **characterized by** comprising a wiper arm (30) that includes a first connecting part (52), and a wiper blade (40) that includes a second connecting part (71) connected to the first connecting part (52) and wipes a wiping surface (GS), the first connecting part (52) and the second connecting part (71) being rotatably connected to each other about an axial center (CT) extending in a wiping direction of the wiper blade (40), wherein
the wiper arm (30) and the wiper blade (40) are rotated with respect to each other within a predetermined angle range (β) about the axial center (CT) during a wiping operation of the wiper blade (40); and
the wiper arm (30) and the wiper blade (40) respectively include a first abutment part (53a, 53b, 54a, 54b) and a second abutment part (65a, 65b, 66a, 66b) that abut against each other when the wiper arm (30) and the wiper blade (40) are rotated beyond the predetermined angle range (β).

2. The wiper device (10) according to claim 1, wherein
the wiper blade (40) is provided with a connecting member (60) that extends in a longitudinal direction of the wiper blade (40) and in which the second connecting part (71) and the second abutment part (65a, 65b, 66a, 66b) are arranged side by side in the longitudinal direction;
on a side opposite to a side where the second abutment part (65a, 65b, 66a, 66b) is arranged in the longitudinal direction of the connecting member (60), a connecting member end (67, 68) is provided; and
a length (L3) of a line segment connecting the axial center (CT) and the connecting member end (67, 68) is equal to or larger than a length (L 1) of a line segment connecting the axial center (CT) and the second abutment part (65a, 65b, 66a, 66b).

3. The wiper device (10) according to claim 1 or claim 2, wherein
the first abutment part (53a, 53b, 54a, 54b) is provided on both sides of the first connecting part (52) in the longitudinal direction of the wiper blade (40); and
the second abutment part (65a, 65b, 66a, 66b) is provided on both sides of the second connecting part (71) in the longitudinal direction of the wiper blade (40).

4. The wiper device (10) according to claim 1 or claim 2, wherein
the second abutment part (65a, 65b, 66a, 66b) provided on the wiper blade (40) is arranged on the wiping surface (GS) side with respect to the axial center (CT).

5. The wiper device (10) according to claim 1 or claim 2, wherein
the wiper arm (30) is provided with:
a pair of outer walls (32a, 32b), arranged facing each other in the wiping direction of the wiper blade (40); and
a pair of sidewalls (51a, 51b), arranged between the pair of outer walls (32a, 32b) and supporting the first connecting part (52), wherein
the first abutment part (53a, 53b, 54a, 54b) is provided on a surface of the pair of sidewalls (51a, 51b) facing the wiping surface (GS), and is parallel to a surface of the pair of outer walls (32a, 32b) facing the wiping surface (GS).

6. The wiper device (10) according to claim 5, wherein
the wiper blade (40) is provided with an inclined surface (65, 66) that is inclined to approach the wiping surface (GS) as moving away from the second connecting part (71) in the longitudinal direction of the wiper blade (40); and
the inclined surface (65, 66) serves as the second abutment part (65a, 65b, 66a, 66b).

7. The wiper device (10) according to claim 6, wherein
when the wiper arm (30) and the wiper blade (40) are rotated beyond the predetermined angle range (β), the first abutment part (53a, 53b, 54a, 54b) makes line contact with the second abutment part (65a, 65b, 66a, 66b).

8. The wiper device (10) according to claim 2, wherein
the connecting member (60) includes:
a blade holding part (61), arranged on the wiping surface (GS) side and holding a blade rubber (41) that wipes the wiping surface (GS); and
an adapter part (70), arranged on a side opposite to the wiping surface (GS) side of the blade holding part (61) and including the second connecting part (71), wherein
a holder covering part (T1, T2) that covers an end of a rubber holder (43) covering a side opposite to the wiping surface (GS) side of the blade rubber (41) is provided on both longitudinal sides of the blade holding part (61); and
the second abutment part (65a, 65b, 66a, 66b) is provided on the holder covering part (T1, T2).

9. The wiper device (10) according to claim 8, wherein
the adapter part (70) is able to be inclined in the wiping direction of the wiper blade (40) inside a pair of sidewalls (51a, 51b) provided on the wiper arm (30);
the blade holding part (61) is wider than the adapter part (70) in the wiping direction of the wiper blade (40); and
the second abutment part (65a, 65b, 66a, 66b) is an inclined surface (65, 66) that is inclined to approach the wiping surface (GS) as moving away from the adapter part (70) in the wiping direction of the wiper blade (40).

10. The wiper device (10) according to claim 1 or claim 2, wherein
the first connecting part (52) is a connecting shaft (52) extending in the wiping direction of the wiper blade (40);
the second connecting part (71) is a pair of holding claws (71) that are arranged facing each other in the longitudinal direction of the wiper blade (40) and have flexibility allowing the connecting shaft (52) to be inserted inside; and
a recessed groove (72) that facilitates bending of each of the pair of holding claws (71) is provided at a base of the pair of holding claws (71).

11. The wiper device (10) according to claim 1, wherein
the wiper arm (30) includes a first sidewall (51a) and a second sidewall (51b) that are arranged facing each other in the wiping direction of the wiper blade (40) and support the first connecting part (52) in the wiping direction of the wiper blade (40);
the wiper blade (40) includes a first facing wall (WL1, WL3) and a second facing wall (WL2, WL4), the first facing wall (WL1, WL3) entering inside the first sidewall (51a) and the second sidewall (51b) and facing the first sidewall (51a), the second facing wall (WL2, WL4) facing the second sidewall (51b);
the first facing wall (WL1, WL3) and the second facing wall (WL2, WL4) are respectively arranged on both sides of the second connecting part (71) in the longitudinal direction of the wiper blade (40);
the first facing wall (WL1, WL3) and the second facing wall (WL2, WL4) respectively include:
a first inclined surface (75a, 76a, 79a, 80a), arranged on the wiping surface (GS) side and facing the wiping surface (GS) side; and
a second inclined surface (75b, 76b, 79b, 80b), arranged on a side opposite to the wiping surface (GS) side and facing a side opposite to the wiping surface (GS) side, wherein
the wiper blade (40) is able to be inclined in the wiping direction of the wiper blade 40 with respect to the wiper arm (30);
when the wiper blade (40) is inclined in one direction with respect to the wiper arm (30), the second inclined surface (75b, 79b) of the first facing wall (WL1, WL3) abuts against the first sidewall (51a), and the first inclined surface (76a, 80a) of the second facing wall (WL2, WL4) abuts against the second sidewall (51b); and
when the wiper blade (40) is inclined in an other direction with respect to the wiper arm (30), the first inclined surface (75a, 79a) of the first facing wall (WL1, WL3) abuts against the first sidewall (51a), and the second inclined surface (76b, 80b) of the second facing wall (WL2, WL4) abuts against the second sidewall (51b).

12. The wiper device (10) according to claim 11, wherein
the first connecting part (52) is a connecting shaft (52) extending in the wiping direction of the wiper blade (40);
the second connecting part (71) is a pair of holding claws (71) that are arranged facing each other in the longitudinal direction of the wiper blade (40) and have flexibility allowing the connecting shaft (52) to be inserted inside; and
the pair of holding claws (71) are arranged at a position recessed in the wiping direction of the wiper blade (40) from the first facing wall (WL1, WL3) and the second facing wall (WL2, WL4).

13. The wiper device (10) according to claim 11, wherein
an end (75d, 76d, 79d, 80d) on the wiping surface (GS) side and an end (75e, 76e, 79e, 80e) on a side opposite to the wiping surface (GS) side of the first facing wall (WL1, WL3) and the second facing wall (WL2, WL4) extend parallel to the longitudinal direction of the wiper blade (40).

14. The wiper device (10) according to claim 11, wherein
between the first inclined surface (75a, 76a, 79a, 80a) and the second inclined surface (75b, 76b, 79b, 80b), an apex part (75c, 76c, 79c, 80c) is arranged that protrudes most in the wiping direction of the wiper blade (40), and the apex part (75c, 76c, 79c, 80c) extends parallel to the longitudinal direction of the wiper blade (40).

15. The wiper device (10) according to claim 11, wherein
the wiper blade (40) includes a connecting member (60) that extends in the longitudinal direction of the wiper blade (40) and includes the second connecting part (71);
the connecting member (60) further includes:
a blade holding part (61), arranged on the wiping surface (GS) side and holding a blade rubber (41) that wipes the wiping surface (GS); and
an adapter part (70), arranged on a side opposite to the wiping surface (GS) side of the blade holding part (61) and including the second connecting part (71), the first facing wall (WL1, WL3) and the second facing wall (WL2, WL4), wherein
a holder covering part (T1, T2) that covers an end of a rubber holder (43) covering a side opposite to the wiping surface (GS) side of the blade rubber (41) is provided on both longitudinal sides of the blade holding part (61); and
the holder covering part (T1, T2) is arranged at a position corresponding to the first facing wall (WL1, WL3) and the second facing wall (WL2, WL4) in the longitudinal direction of the wiper blade (40).
